# EUROPÄISCHE PATENTSCHRIFT

(11) **EP 2 893 293 B1**
(45) Veröffentlichungstag und Bekanntmachung des Hinweises auf die Patenterteilung: **02.11.2016**
(21) Anmeldenummer: 13759999.9
(22) Anmeldetag: 04.09.2013
(51) Int. Cl.: G01B 21/04, H04L 12/40, G01D 21/00

(54) **MESSMASCHINENKOMMUNIKATION MIT AUTOMATISCHER ADRESSVERGABE**
MEASURING MACHINE COMMUNICATION WITH AUTOMATIC ADDRESS ASSIGNMENT
COMMUNICATION DE MACHINE DE MESURE AVEC ATTRIBUTION D'ADRESSE AUTOMATIQUE

(30) Priorität: 05.09.2012 EP 12183210
(43) Veröffentlichungstag der Anmeldung: 15.07.2015
(73) Patentinhaber: Hexagon Technology Center GmbH, 9435 Heerbrugg (CH)
(72) Erfinder: FRITSCH, Robert, CH-9436 Balgach (CH)
(74) Vertreter: Gyaja, Christoph Benjamin
(86) Internationale Anmeldenummer: PCT/EP2013/068290
(87) Internationale Veröffentlichungsnummer: WO 2014/037404

(56) Entgegenhaltungen:
- DE-A1- 19 713 240
- DE-A1-102006 050 135
- DE-A1-102009 054 904

## Beschreibung

Die Erfindung betrifft ein Verfahren zur automatischen Adressiteration von teilnehmerspezifischen Kommunikationsadressen für Teilnehmer in einem Messsystem nach dem Oberbegriff des Anspruchs 1, einem derartigen Teilnehmer nach dem Oberbegriff des Anspruchs 12 und ein mit derartigen Teilnehmern ausgestattetes Koordinatenmessgerät nach dem Oberbegriff des Anspruchs 14.

Bei einer Vielzahl von technischen Maschinen und Anlagen werden mehrere elektronische Subsysteme in einem Kommunikationsverband zusammengeschaltet, welchen unterschiedlichste Funktionen zukommen können, beispielsweise Sensoren, Aktoren, Schalter, Anzeigen, Messeinheiten, Controllersysteme, Monitorsystem, Überwachungs- und Debug-Geräte, etc. Diese können fest in der Maschine oder Anlage verbaut und verschaltet sein, etwa im Rahmen der Produktion - können aber auch modular austauschbar sein, sei es im Servicefall oder während des regulären Betriebs.

Diese Erfindung betrifft insbesondere Messsysteme. Beispiele für solche Messsysteme, welche als Koordinatenmessgeräte ausgeführt sind, finden sich etwa in WO 2005/017448, EP 2 270 425 oder WO 2006/079604. Diese Messsysteme weisen mehrere Subsysteme auf, speziell in Form von elektronischen Linear- und/oder Dreh-Lagegebern zur Messwerterfassung, welche mit einem Controller zur Messwertauswertung und Steuerung der Messabläufe in einer Kommunikationsbeziehung stehen. Diese Subsysteme sind meist räumlich verteilt an der Maschine angeordnet, sodass das Herstellen der Kommunikationsverbindung zwischen den Subsystemen, welche an der Kommunikation teilnehmen, mit einem entsprechenden Verkabelungsaufwand verbunden ist. Im Messsystem sind also die Teilnehmer der Kommunikation untereinander verkabelt, um die Kommunikationsverbindung und/oder eine Energieversorgung herzustellen. Neben den Lagegebern können auch noch weitere Subsysteme, etwa Tastköpfe, Messköpfe, Sensoren z.B. zur Erfassung von Umgebungsbedingungen wie Temperatur, etc. oder auch Aktoren wie Achsantriebe, motorisierte Schwenkköpfe, Anzeigeelemente, etc. vorhanden sein, welche ebenfalls an der Kommunikation teilnehmen. Um den Verkabelungsaufwand gering zu halten, wird in den Messmaschinen versucht, möglichst wenige, vorzugsweise nur eine Kommunikationsverbindung für alle beteiligten Subsysteme zu nutzen. Auch wird versucht die Kommunikationsverbindungen vorteilhaft zu gestalten, also etwa doppelte Leitungsführungen möglichst zu vermeiden, welche etwa bei einer sternförmigen Verkabelung jedes Subsystems hin zum Controller vielfach auftreten.

Neben den oben beschriebenen Subsystemen, welche meist fix am Meßsystem montiert sind, können auch austauschbare Komponenten an der Messung beteiligt sein, beispielsweise austauschbare Messköpfe, Messtaster, Schwenkköpfe, optische Probenköpfe, etc., welche an unterschiedlichste Messaufgaben angepasst sind und ebenfalls in die Kommunikation eingebunden werden. Da deren Austausch während des Betriebs oder im Rahmen einer Konfigurationsänderung der Maschine erfolgen kann, kann sich dadurch auch das sich in Betrieb befindliche Kommunikationssystem verändern. Auch im Falle von Servicearbeiten und Reparaturen kann ein Auswechseln eines Subsystems als Teilnehmer im Kommunikationssystem erforderlich sein.

Bei derartigen Meßsystemen erfolgt die Kommunikation zwischen den Geräten oder Subsystemen als den Teilnehmern des Kommunikationssystems, oftmals über Busstrukturen. Beispielsweise kann für die Kommunikation eine Busstruktur - wie z.B. RS232, RS422, RS423, RS485, oder auch andere - verwendet werden. Eine gängige, bezüglich der örtlichen Anordnung der Teilnehmer im Messsystem oft vorteilhafte Topologie ist dabei eine Serienstruktur. In dieser sind die Teilnehmer einer nach dem anderen angeordnet und, mit jeweils nur einer Verbindung zwischen jeweils zwei Subsystemen, mit dem Bus verbunden. Dabei finden sich unter den Teilnehmern vielfach auch mehrere gleichartige, z.B. mehrere Lagegeber desselben Typs, welche über den gemeinsamen Bus mit einer Steuereinheit kommunizieren, also etwa die von ihnen ermittelten Lageinformationen zur Steuereinheit übermitteln. Im Sinne einer einfachen Lagerhaltung und Wartung sind die gleichartigen Subsysteme vor dem Einbau ins Messsystem meist ohne jeglichen Unterschied, sodass sie an unterschiedlichsten Stellen in der Maschine sowie in unterschiedlichen Maschinen einsetzbar sind.

In der Anwendung ist es jedoch von Bedeutung, die an den Bus angeschlossenen Subsysteme unterscheiden und identifizieren zu können, selbst wenn es sich um gleichartige Subsysteme handelt. Bei Koordinatenmessgeräten ist es beispielsweise bei einer Vermessung essenziell zu wissen, mit welchem Lagegeber welche Bewegungsachse des Messsystems erfasst wird.

Hierzu kann beispielsweise eine Kommunikationsadresse verwendet werden, welche jeweils an den Teilnehmern einstellbar ist. Diese Adresse wird oft erst direkt vor oder nach dem Einbau des Teilnehmers vergeben, etwa durch DIP-Schalter, Codierstecker, elektronische Programmiergeräte etc. Ein derartiges Vorgehen ist jedoch fehleranfällig und zeitaufwändig.

In der Literatur finden sich in anderen Technologiegebieten einige Ansätze zur Vermeidung einer manuellen Adressvergabe. Beispielsweise beschreibt

US 5,666,557 eine automatische Adressierung von Peripheriegeräten in einem Datenverarbeitungssystem mit Hilfe von Stecker-Kennungen;
WO 98/03921 die automatische Erkennung der Reihenfolge von Geräten eines Netzwerk-Kommunikationsgeräts anhand einer Pulslänge eines Zusatzsignals;
WO 2004/039010 ein Setzen von Adressen von Kind-Geräten durch ein Eltern-Gerät;
WO 2007/104668 bzw. DE 10 2006 025 174 eine Adressvergabe für Fahrerassistenzsysteme.

DE 10 2006 050 135, DE 10 2009 054 904 oder DE 197 13 240 zeigen Adressvergaben, in welchen - kontrolliert von einem Steuerungsmaster - automatisch Adressen vergeben werden und die Teilnehmer durch Auslesen von teilnehmerspezifischen Informationen zugeordnet werden - also ebenfalls anhand von teilnehmerspezifischen eindeutigen Kennungen, welche jedem der Teilnehmern exklusiv zugewiesen sind.

All diesen bekannten Ansätzen ist gemein, dass den Teilnehmern von außen eine Adresse vergeben wird. Dies ist selbst bei obigen Ansätzen immer noch aufwändig und erfordert hierfür in vielen Fällen zusätzliche Hardware - wie Codierschalter, Codierstecker, zusätzliche Stecker-Pins, etc. Auch ist der Aufwand zur Vergabe dieser Adresse, sei es bei der Produktion, Inbetriebnahme oder im Rahmen einer Businitialisierung nicht zu vernachlässigen. Eine Vergabe von falschen Adressen ist zudem eine häufige Fehlerquelle in Messsystemen, speziell bei einem Austausch von Komponenten im Servicefall. Durch vertauschte Adressen von Kommunikationsteilnehmern können nicht nur Fehlfunktionen, sondern auch Hardwareschäden hervorgerufen werden.

Es ist daher eine Aufgabe der vorliegenden Erfindung, die Kommunikation von Teilnehmern einer Messmaschine zu verbessern.

Eine Aufgabe besteht auch darin, ein MessmaschinenKommunikationssystem bereitzustellen, welches einfach und kostengünstig realisierbar ist und bei welchem die Notwendigkeit einer externen Adressvergabe für jeden Teilnehmer entfällt - speziell also ohne eine explizite, eindeutige Adressvergabe an jeden der Teilnehmer von außen.

Ein Teil der Aufgabe ist dabei auch, dass im Maschinen-Kommunikationssystem alle Teilnehmer bzw. Klassen von Teilnehmern bezüglich ihrer Kommunikationsschnittstellen gleichartig ausgebildet sein können und vor deren Einsatz im Kommunikationssystem keine teilnehmerspezifischen Konfigurationen, etwa in Form einer Adresscodierung, erforderlich sind.

Es ist entsprechend auch eine Aufgabe, ein verbessertes Kommunikationsverfahren für Subsysteme in einer Maschine, insbesondere in einer Messmaschine, bereitzustellen.

Eine Aufgabe ist somit auch ein entsprechendes Verfahren zur Kommunikation von Teilnehmern des MessmaschinenKommunikationssystems bereitzustellen, bei welchem auf eine externe Adresskonfiguration an jedem der Teilnehmer verzichtet wird.

Eine Teilaufgabe ist auch die Bereitstellung entsprechender Teilnehmer-Software zur Implementierung des Verfahrens.

Die Erfindung stellt ein Verfahren zur Adressvergabe nach Anspruch 1 und einen Teilnehmer einer bidirektionalen Messsystem-Kommunikation nach Anspruch 12 zur Verfügung. Weiterhin ist im Rahmen der Erfindung im Anspruch 14 ein Koordinatenmessgerät mit einem erfindungsgemäßen Teilnehmer sowie im Anspruch 15 ein Computerprogrammprodukt bzw. ein Computer-Daten-Signal beansprucht.

Bei einem erfindungsgemäßen Kommunikationssystem bzw. Kommunikationsverfahren wird an die einzelnen Teilnehmer des Kommunikationssystems keine Vergabe einer teilnehmerspezifischen, im Kommunikationssystem eindeutigen Adresse von außen durchgeführt. Dieses vereinfacht die Lagerhaltung, Produktion und Wartung und hilft Flüchtigkeitsfehler bei einer Adressvergabe oder Adresscodierung zu vermeiden.

In der vorliegenden Erfindung gibt sich das jeweilige Gerät oder Subsystem, als Teilnehmer am Kommunikationssystem, selbst seine Kommunikationsadresse mit Hilfe von Beobachtungen und Vermeidung von Kollisionen. Es wird eine automatische Adressiteration von teilnehmerspezifischen Kommunikationsadressen in den Teilnehmern ausgeführt, welche hin zu einer Eindeutigen Adressvergabe an jeden der Teilnehmer konvergiert. Die Teilnehmer organisieren sich selbst. Das Steuergerät kann sich voll auf die Steueraufgabe konzentrieren und wird für eine explizite Teilnehmeradressvergabe von außen nicht benötigt.

Für diese Erfindung ist die Topologie des verwendeten Busses nicht weiter relevant, insofern jeder Teilnehmer alle Meldungen der anderen Teilnehmer am Bus empfängt. Jedes Gerät kann daher die Kommunikation auf dem Bus mitverfolgen und erhält dadurch Informationen für seine Adressvergabe an sich selbst.

Als Bus kommen alle möglichen physikalischen Ausbreitungswege wie optisch, elektrisch, per Funk, magnetisch, kapazitiv, induktiv in Betracht.

Für die Adressvergabe wird dabei erfindungsgemäß ein Kollisionsvermeidungsverfahren verwendet. Bei einer Kollision auf Hardware-Ebene, wie diese bei CAN Bussen oder bei Ethernet über Koaxialkabel bekannt ist, wird jedoch eine Kollision von gleichzeitig abgesetzten, identischen Busmeldungen nicht erkannt, da diese auf der Leitung nicht hardwarebezogen kollidieren. Eine Kollision ist dabei nur detektierbar, wenn Meldungen unterschiedlichen Inhalts verschickt werden. Setzen zwei Teilnehmer eine identische Meldung zur selben Zeit ab, reagiert das Kollisionserkennungsverfahren nicht. (Was im regulären Betreib meist nicht weiter stört, da die Meldung ja korrekt an alle Teilnehmer erging.)

Eine Meldung an alle Teilnehmer mit der Anwesenheitsanfrage "Sind Teilnehmer vorhanden?" und mit der jeweils selben Antwort "Ja" von allen Teilnehmern hilft bei der erfindungsgemäßen Adressvergabe mittels Kollisionsdetektion daher nicht weiter.

Zur erfindungsgemäßen Kollisionsdetektion, sind Meldungen mit einer möglichst hohen Kollisionswahrscheinlichkeit vorteilhaft, also speziell Meldungen mit unterschiedlichen Meldungsinhalten. Die Adressen der Teilnehmer können dann anhand von eigenen Beobachtungen der Kommunikation auf dem Bus iterativ ermittelt und geändert werden, bis eine kollisionsfreie Kommunikation aller Teilnehmer hergestellt ist. Die iterative Adressermittlung findet somit speziell zu Beginn der Kommunikation, also etwa nach dem Einschalten der mit dem erfindungsgemäßen Kommunikationssystem ausgestatteten Maschine oder Anlage, oder bei Hinzukommen eines oder mehrerer zusätzlicher Busteilnehmer statt. Ist die iterative Adressvergabe einmal abgeschlossen und werden keine Veränderungen am Bus vorgenommen, kann die eigentliche Kommunikation während des Betriebs basierend auf den von den Teilnehmern für sich selbst ermittelten Adressen gleich verlaufen, wie dieses bei fix von außen in den Teilnehmern vorgegebenen Adressen im Stand der Technik der Fall ist.

Bei Anwendung eines gemeinsamen Kommunikationsmediums, welches von den Teilnehmern geteilt wird, wie etwa bei 10Base5 oder 10Base2 Ethernet oder CAN, gilt es also eine Kollision von Meldungen auf dem Kommunikationsmedium, beispielsweise auf einer Kommunikationsleitung oder einem Funkkanal, zu erkennen. Dieses wird vielfach durch einen dominanten und einen rezessiven Buszustand und ein Mithören während des Sendens realisiert. Die dominante Meldung setzt sich durch, während der Teilnehmer, der versucht die rezessive Meldung abzusetzen, sich bei Erkennung einer Kollision vom Bus zurückzieht und - z.B. entsprechend eines vordefinierten Scheduling - zu einem späteren Zeitpunkt erneut versucht, seine Meldung durchzubringen. Es entsteht somit eine meldungsabhängige Priorisierung oder Hierarchie der Kommunikation bzw. der Teilnehmer. Zur elektronischen Realisierung eines derartigen Bussystems stellt der Stand der Technik verschiedenste elektronische Bausteine oder IP-Cores bereit, welche im Rahmen der Erfindung eingesetzt oder in funktionell ähnlicher Form nachgebildet werden können.

Wie erwähnt kann eine Kollision jedoch nur festgestellt werden, wenn die zwei kollidierenden Meldungen unterschiedlich sind. Bei exakt gleichen Meldungen, welche zum selben Zeitpunkt übertragen werden, kann keine Kollision festgestellt werden. Somit würden beispielsweise zwei Teilnehmer mit derselben Adresse, welche auf eine Anfrage hin zur selben Zeit dieselbe Antwort senden, keine Kollision feststellen können. Insbesondere bei gleichartigen Teilnehmern, welche auf die gleiche Anfrage antworten, kann dies sehr wahrscheinlich auftreten.

Zur iterativen Adressbestimmung eignet sich daher kein einfacher Ansatz mit einer globalen Anfrage eines Gerätes im Sinne von einer Aufforderung an alle vorhandenen Busteilnehmer sich zu melden. Alle Teilnehmer würden darauf mit einer Reaktion im Sinne einer Vorhandenseinsmeldung von "Teilnehmer <Adresse> ist vorhanden!" antworten. Da im Adress-Konfliktfall diese Meldungen gleich und daher nicht kollidierend wären, ist dieser Ansatz nicht zielführend für die erfindungsgemäße Adressiteration. Zwei Teilnehmer welche dieselbe Adresse haben, würden bei einem gemeinsam genutzten Kommunikationsmedium aufgrund der Gleichheit der Meldungen also keine Kollision feststellen können und sähen sich daher auch nicht veranlasst, ihre doppelt vorhandene Adresse zu verändern.

Um die Meldungen - oder besser gesagt deren Inhalt - differenzieren zu können, kann eine eindeutige Kennung mit der Meldung versandt werden. Hierzu kann beispielsweise eine Hardware ID eines Bausteins des Kommunikationsteilnehmers verwendet werden, denn viele Mikrocontroller, Prozessoren, Speicherchips, etc. haben eine auslesbare spezifische Kennung, welche ihnen bei deren Produktion zugewiesen oder "eingebrannt" wird. Jedoch sind diese IDs in vielen Fällen auch lediglich auf Fertigungslose heruntergebrochen, sodass speziell bei Teilnehmern aus demselben Fertigungslos eine gewisse Wahrscheinlichkeit für Doppelvergaben besteht.

Sind Kennungen eindeutig, so sind sie dennoch zur direkten Verwendung als Adresse für die Kommunikation vielfach ungeeignet. Speziell sind diese oft zu lang oder sie weisen eine für eine Adresse ungeeignete Struktur auf. Beispielsweise ist es bei einem Bus mit maximal bis zu N Teilnehmern nicht effizient Adressen zu verwenden, welche deutlich länger als log2(N) Bit sind. So kann etwa die Adressierung eines Teilnehmers in einem ONEWIRE-Bus anhand seiner - bei der Produktion eingebrannten - ROM-ID oft deutlich länger dauern als die eigentliche Nutzdatenübertragung, was die Bus-Performance deutlich limitiert.

Im Falle zu langer Kennungen kann ein Hashwert von angemessener Länge aus der Kennung berechnet werden, welcher dann, als Adresse verwendet, mit einer statistisch gesehen immer noch recht hohen Wahrscheinlichkeit eindeutig ist. Ist auf Basis einer solchen fixen Kennung einmal ein Konflikt vorhanden, so lässt sich dieser nur durch Austausch eines der Teilnehmer lösen.

Um für eine Kollisionsdetektion möglichst teilnehmereindeutige Daten in einer Teilnehmermeldung zu erhalten, kann etwa ein Zufallszahlgenerator genutzt werden. Um die Konfliktwahrscheinlichkeit weiter zu senken, können gegebenenfalls auch mehrere derart generierte Zufallszahlen miteinander zu einer wahrscheinlich eindeutigen Kennung verknüpft werden, welche mit der Meldung mitübertragen wird. Jedoch bieten einfache Mikroprozessoren, wie diese vielfach in Busteilnehmern von Messmaschinen eingesetzt werden, meist keine oder keine hinreichend zuverlässigen Zufallszahlengeneratoren. Die Alternativen von softwaregenerierten Pseudo-Zufallszahlen ist meist rechenintensiv und vielfach auch wenig zuverlässig, insbesondere bei zu 100 % gleichartigen Teilnehmern. Sollte zufällig dennoch ein solch wenig wahrscheinlicher Konflikt auftreten, so kann dieser durch einen Reset oder ein Aus- und Einschalten behoben werden.

Eine Möglichkeit, welche sich insbesondere bei erfindungsgemäßen Meßsystemen bietet, ist die Verwendung von Sensorsignalen, speziell von Rohdaten, auf welche noch keine Mittelwertbildungen, digitale Filter, etc. angewandt wurden. Die Wahrscheinlichkeit, dass zwei, auch gleichartige, Geräte des Bussystems immer exakt dieselben Sensorsignale messen geht mit steigender Zeit gegen Null. Insbesondere während eines Kalibrier- oder Referenziervorganges einer Maschine, welche mit dem erfindungsgemäßen Kommunikationssystem ausgestattet ist, sind mit einer an Sicherheit grenzenden Wahrscheinlichkeit nicht durchwegs alle Sensorsignale exakt gleich. Spätestens im Rahmen eines solchen Kalibrier- oder Referenziervorgangs sind Meldungen, welche Sensorwerte enthalten, daher sehr wahrscheinlich, wenn nicht sicher, unterschiedlich.

Erfindungsgemäß wird also ein Verfahren zur Adressvergabe von teilnehmerspezifischen Kommunikationsadressen für Teilnehmer in einem Messsystem, insbesondere in einem Positionsmesssystem eines Koordinatenmessgeräts mit Messsensoren als Teilnehmern durchgeführt. In diesem erfolgt die Kommunikation der Teilnehmer über ein Bussystem mittels Meldungen mit zumindest einer Kommunikationsadresse und einem Meldungsinhalt, wobei die von einem der Teilnehmer gesendeten Meldungen von allen weiteren der Teilnehmer empfangen werden. Dabei führen die Teilnehmer im Rahmen eines Kalibrier- oder Referenziervorgangs der Teilnehmer oder des Messsystems eine automatische Adressiteration mit einem Beobachten der Meldungen auf dem Bussystem und einem Erkennen einer Kollision durch eine Kommunikationsadresse einer empfangenen Meldung, welche gleich der teilnehmereigenen Kommunikationsadresse ist, und gegebenenfalls eine kollisionsbedingte Vergabe einer geänderten und mit der empfangenen Meldung kollisionsfreien teilnehmereigenen Kommunikationsadresse des Teilnehmers an sich selbst, durch. Zudem erfolgt anhand einer im Rahmen des Kalibrier- oder Referenziervorgangs durchgeführten, definierten Stimulation von zumindest einem Sensor von zumindest einem der Teilnehmer ein ermitteln einer Adressen-Geräte-Zuordnung der Teilnehmer, wobei insbesondere eine Identifikation der Teilnehmer in ihrer Reihenfolge und/oder Funktion im Messsystem erfolgt.

Die Ermittlung der dabei resultierenden Adressen-Geräte-Zuordnung der Teilnehmer im Messsystem, (welche bei der iterativen automatischen Adressvergabe nicht zwangsläufig im vorhinein bekannt oder definiert ist,) erfolgt dabei also anhand einer im Rahmen des Kalibrier- oder Referenziervorgangs durchgeführten definierten Stimulation der Teilnehmer.

Auf Basis der nunmehr (beinahe) sicher kollidierenden Meldungen, vergeben sich erfindungsgemäß alle am Bus beteiligten Geräte innerhalb von kurzer Zeit unterschiedliche, eindeutige Adressen. Sind erst einmal unterschiedliche Adressen vergeben, tritt eine Kollision von Meldungen in einem Adressbereich der Meldung auf. Diese kann z.B. durch Anwendung einer Kollisionsdetektion und - vermeidung mittels dominanter und rezessiver Buszustände gelöst werden. Auch können weitere Kollisionen a priori vermieden werden, indem z.B. vor dem Versand einer Antwort auf eine Anfrage an mehrere der Teilnehmer, eine adressabhängige - und somit eindeutige - Zeitdauer gewartet wird, also eine Art von Zeitschlitzverfahren angewandt wird.

Bei einer Serienstruktur mit einem nicht gemeinsam genutzten Bus ist eine Kollision nicht durch ein gleichzeitiges Senden und Mithören feststellbar. Ein Konflikt von Adressen ist in einem solchen Fall vielmehr dadurch feststellbar, dass ein Teilnehmer eine Meldung empfängt, welche - entsprechend des Meldungsinhalts - angeblich von ihm selbst gesendet wurde, was bei eindeutigen Adressen im Kommunikationssystem aber nicht der Fall sein kann. In einem derartigen Bus ist also dies als Kollisionsbedingung für die Kollisionsdetektion von mehrfach vergebenen Adressen anzuwenden, welche den Teilnehmer zu einer Anpassung seiner Kommunikationsadresse veranlasst.

Im Falle einer Adressänderung kann das Gerät, welches seine Adresse geändert hat, dieses den anderen Geräten im Bus mitteilen. Beispielsweise in Form einer Meldung mit alter und neuer Adresse, welche über den Bus an alle anderen Teilnehmer geschickt wird. Speziell bei Hinzukommen eines neuen Teilnehmers nach einer ersten Initialisierung und eindeutigen Adressvergabe kann dieses hilfreich sein. Haben andere Teilnehmer mit der alten Adresse eine Geräteidentifikation, Gerätefunktionalität oder Gerätetopologie verknüpft, so kann diese anhand dieser Meldung mit der neuen Adresse verknüpft werden und die Zuordnung aktuell gehalten werden.

Diese Erfindung kann prinzipiell überall dort eingesetzt werden, wo Teilnehmer über einen Bus miteinander kommunizieren. Insbesondere die Komponenten in Messgeräten wie Articulated Arms, geodätischen Instrumenten oder Koordinatenmessmaschinen können vorteilhaft mit einer erfindungsgemäßen Kommunikation ausgestattet sein. Die erfindungsgemäße automatische Adressvergabe kann beispielsweise bei Koordinatenmessgeräten mit wechselbaren Messköpfen oder Proben vorteilhaft angewandt werden. Ein in der Kommunikation des Messsystems neu als Teilnehmer hinzukommender Messkopf, fügt sich erfindungsgemäß automatisch in das bestehende Kommunikationssystem ein, ohne dass dieser eine für ihn spezifisch von außen codierte und im Messsystem eindeutige Adresse aufweist. Nach der hier beschriebenen, automatischen Adressanpassung auf Basis einer Kollisionsdetektion weist sich der neue Teilnehmer eine eindeutige, konfliktfreie Adresse selbst zu und ist somit ins Messsystem eingebunden.

Auch im Service-Fall können erfindungsgemäße, am Kommunikationssystem teilnehmende Subsysteme einfach ausgetauscht werden, ohne dass ein Servicetechniker der Ersatzkomponente eine Kommunikationsadresse vergeben muss, welche jener des ausgetauschten Teilnehmers entspricht. Auch an der Maschinenkonfiguration müssen keine Anpassungen vorgenommen werden, da sich die Kommunikationsstruktur durch das Ersatz-Subsystem nicht ändert.

Das erfindungsgemäße Verfahren und die erfindungsgemäße Vorrichtung werden nachfolgend anhand von konkreten Ausführungsbeispielen, welche in den Zeichnungen schematisch dargestellt sind, rein beispielhaft näher beschrieben. Dabei wird auch auf weitere Vorteile der Erfindung eingegangen. Im Einzelnen zeigen:
- Fig. 1a: eine erste beispielhafte Ausführungsform eines erfindungsgemäßen Kommunikationssystems;
- Fig. 1b: eine Variante der ersten beispielhaften Ausführungsform;
- Fig. 2: eine zweite beispielhafte Ausführungsform eines erfindungsgemäßen Kommunikationssystems;
- Fig. 3: eine dritte beispielhafte Ausführungsform eines erfindungsgemäßen Kommunikationssystems;
- Fig. 4: eine vierte beispielhafte Ausführungsform eines erfindungsgemäßen Kommunikationssystems;
- Fig. 5a: ein Diagramm eines ersten beispielhaften Ablaufs einer erfindungsgemäßen Maschinenkommunikation;
- Fig. 5b: ein Diagramm eines zweiten beispielhaften Ablaufs einer erfindungsgemäßen Maschinenkommunikation;
- Fig. 6: ein Diagramm eines dritten beispielhaften Ablaufs einer erfindungsgemäßen Maschinenkommunikation;
- Fig. 7a: ein Diagramm eines vierten beispielhaften Ablaufs einer erfindungsgemäßen Maschinenkommunikation;
- Fig. 7b: ein Beispiel einer Meldung, wie eine Meldung aufgebaut sein kann;
- Fig. 8: ein Diagramm eines fünften beispielhaften Ablaufs einer erfindungsgemäßen Maschinenkommunikation;
- Fig. 9: ein erstes beispielhaftes, vereinfachtes Ablaufdiagramm einer Ausführungsform einer erfindungsgemäßen Maschinenkommunikation;
- Fig. 10a: ein zweites beispielhaftes, vereinfachtes Ablaufdiagramm einer Ausführungsform einer erfindungsgemäßen Maschinenkommunikation;
- Fig. 10b: ein drittes beispielhaftes, vereinfachtes Ablaufdiagramm einer Ausführungsform einer erfindungsgemäßen Maschinenkommunikation;
- Fig. 11: ein erstes Beispiel einer Ausführungsform einer Messmaschine, in welcher die erfindungsgemäße Maschinenkommunikation angewandt ist;
- Fig. 12: ein zweites Beispiel einer Ausführungsform einer Messmaschine, in welcher die erfindungsgemäße Maschinenkommunikation angewandt ist.

Als Kommunikationsbus im Sinne der vorliegenden Erfindung kommen unterschiedlichste Systeme und physikalische Ausbreitungswege in Betracht. Die Kommunikationsschnittstellen können beispielsweise wie in RS232, RS422, RS423, RS485 spezifiziert ausgeführt sein, aber auch anderen Spezifikationen folgen. Zur physikalischen Kommunikation sind eine Vielzahl von elektronischen Bauteilen bzw. IP-Cores für Kommunikationsschnittstellen im Stand der Technik bekannt, welche erfindungsgemäß zur Kommunikation zwischen jeweils den Teilnehmern eingesetzt werden können. Erfindungsgemäß kann im Kommunikationssystem jeder angeschlossene Teilnehmer alle Meldungen von allen weiteren Teilnehmern empfangen, und entsprechend sind auch gesendete Meldungen eines jeden Teilnehmers von allen anderen Teilnehmern empfangbar. Dieses kann physikalisch oder logisch, etwa durch Weiterleitungen von Busmeldungen sichergestellt werden.

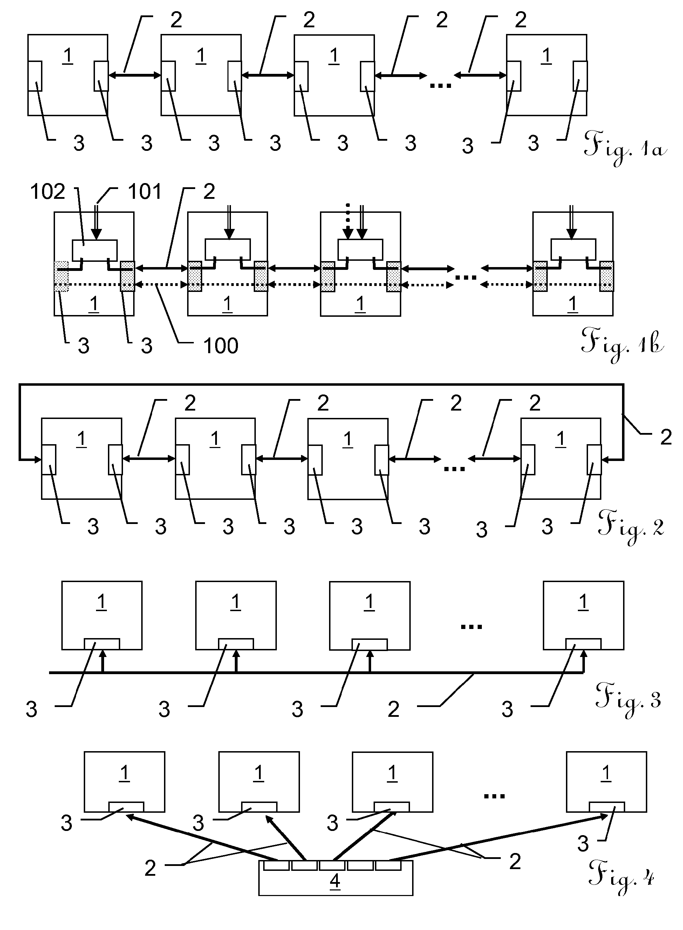

**Fig. 1a** zeigt ein erstes Beispiel eines erfindungsgemäßen Kommunikationssystems mit einem Bus in einer Serienstruktur, bei welchem die physikalischen Kommunikationsleitungen 2 in jedem Teilnehmer 1 hardwaremäßig aufgetrennt sind. Es wird also bei einem Teilnehmer 1 - welcher sich nicht am Anfang oder Ende des Busses befindet - mit einer ersten und mit zumindest einer zweiten Kommunikationsschnittstelle 3 kommuniziert, über welche Kommunikationsschnittstellen 3 der Teilnehmer 1 jeweils mit einem Vorgänger bzw. einem Nachfolger in einer Kommunikationsbeziehung steht. Dadurch kann der Teilnehmer 1 entsprechend der verwendeten Schnittstelle 3 den linken vom rechten Nachbarn unterscheiden, also den Vorgänger und den Nachfolger. Die Teilnehmer 1 bilden dabei im Kommunikationssystem sozusagen eine Kette, und die Kommunikation zwischen den Teilnehmern erfolgt jeweils eins zu eins, also direkt zwischen zwei Teilnehmern 1. Um erfindungsgemäß versandte Meldungen an alle der Teilnehmer 1 zu richten, werden diese jeweils an beiden Schnittstellen 3 des meldungsgenerierenden Teilnehmers 1 abgesetzt. Jeder Teilnehmer 1 leitet zudem auf der ersten Schnittstelle 3 empfangene Meldungen an der zweiten Schnittstelle 3 weiter - fungiert also quasi als Repeater. Um komplexere Topologien zu realisieren, können auch - hier nicht dargestellte - Teilnehmer 1 mit mehr als zwei Schnittstellen 3 vorhanden sein, wobei ebenfalls dafür Sorge getragen wird, dass alle Teilnehmer 1 im Kommunikationssystem alle Meldungen erhalten.

**Fig. 1b** zeigt eine Variante der Ausführungsform aus Fig. 1a, bei welcher neben der Serienstruktur zur Datenkommunikation, vorzugsweise über dieselbe Steckverbindung, eine globale Übertragung eines gemeinsamen Taktsignals (bzw. Takt-Synchronisationssignals) und/oder eines Triggersignals erfolgt, speziell kann dieses - wie z.B. in der erwähnten Referenz - in Form eines kombinierten Takt-Triggersignals erfolgen. Ein derartiges zusätzliches globales Takt- und/oder Triggersignal kann auch bei anderen Ausführungsformen der Erfindung angewandt werden.

**Fig. 2** zeigt ein zweites Beispiel eines erfindungsgemäßen Kommunikationssystems mit einem Bus in einer Serienstruktur, welche zu einem Ring geschlossen ist, indem auch der letzte mit dem ersten Teilnehmer 1 mit einer Kommunikationsverbindung 2 verbunden ist. Dieser Rückschluss vom ersten zum letzten Teilnehmer 1 kann dabei beispielsweise auch über dieselben Kabel wie der Hinschluss erfolgen, sodass optisch der Eindruck einer Serienstruktur, kommunikativ aber ein Ring entsteht. Beispielsweise können hierzu spezielle Endstecker am ersten oder letzten Teilnehmer 1 eingesetzt werden, oder es kann eine automatische Detektion einer nicht belegten Kommunikationsschnittstelle 3 und ein dadurch bedingter automatischer Rückschluss erfolgen. Jeder Teilnehmer 1 muss somit seine Meldung nunmehr an einer Schnittstelle 3 absetzen, um alle der Teilnehmer 1 zu erreichen. Es muss somit die Kommunikation auch nicht mehr in beide Richtungen erfolgen, sondern es kann dabei auch nur in eine Richtung kommuniziert werden um alle Teilnehmer 3 zu erreichen. In einem derartigen Ring ist jedoch dafür Sorge zu tragen, dass dieselbe Meldung nicht mehrfach im Bus umläuft, beispielsweise indem ein Teilnehmer 1 bei Empfang einer von ihm gesendeten Meldung auf der jeweils anderen Schnittstelle 3 diese Meldung nicht weiterleitet.

In Bussystemen wie in Fig. 1 oder gegebenenfalls auch wie in Fig. 2 können bei Verwendung von Schnittstellen 3, welche im Halbduplexbetrieb arbeiten, Zugriffskonflikte bei einem gleichzeitigen Senden und Empfangen von Meldungen entstehen. Diese können durch ein Zwischenspeichern der zu sendenden Meldung im betreffenden Teilnehmer 1 vermieden werden.

Allgemein kann teilnehmerintern ein Zwischenspeichern von Meldungen durchgeführt werden, um Zugriffskonflikte auf der Schnittstelle 3 zu vermeiden, welche etwa auftreten können, wenn ein Weiterleiten einer empfangenen Meldung und ein gleichzeitiges Senden einer eigenen Meldung anstehen, oder eine eigene Meldung derzeit nicht abgesetzt werden kann, da ein gemeinsam genutztes Kommunikationsmedium 2 zu diesem Zeitpunkt von einem anderen Teilnehmer 1 belegt ist.

Das in **Fig. 3** dargestellte Bussystem ist ein drittes Beispiel für ein erfindungsgemäßes Kommunikationssystems mit einem Bus, welcher ein gemeinsames Kommunikationsmedium 2 verwendet, über welches die Teilnehmer 1 miteinander kommunizieren. Die Teilnehmer 1 benötigen dabei nunmehr nur eine einzige Kommunikationsschnittstelle 3 zum Senden und Empfangen von Meldungen. Dabei kann die Verkabelung mit einem einzigen Stecker für zwei Kabel oder mit so genannten T-Stücken erfolgen. Es können auch zwei oder mehr Stecker mit einer direkten Hardwaredurchschleifung der Kommunikationsleitungen verwendet werden. Letzteres mag optisch den Eindruck einer Serienstruktur erwecken, ist aber Kommunikationstechnisch ein gemeinsames Kommunikationsmedium.

Die Kommunikation erfolgt über eine globale Bus-Leitung 2 zu allen Teilnehmern zugleich. Um Zugriffskonflikte der Vielzahl von Teilnehmern 1 auf das einzige, gemeinsame Medium 2 handhaben zu können, sind verschiedenste Ansätze bekannt.

Neben dem ALOHA-Protokoll oder einer Vielzahl von anderen Ansätzen, ist in technischen Kommunikationssystemen vielfach eine Kollisionsdetektion nach dem Dominant-Rezessiv-Ansatz verbreitet, meist in Zusammenhang mit einer entsprechenden Kollisionsvermeidung durch sofortigen Rückzug des rezessiven Teilnehmers. Dabei setzt sich bei sich unterscheidenden Meldungsinhalten von mehreren, gleichzeitig antwortenden Teilnehmern 1 jeweils jener am Bus durch, welcher die dominanteste Meldung abgesetzt hat. Es erfolgt also das Erkennen einer Kollision durch dominante und rezessive Buszustände. Durch Mithören der auf dem Kommunikationsmedium präsenten Meldung während des Sendens, also ein gleichzeitiges Senden und Empfangen und ein Vergleichen von gesendetem und empfangenem, kann dabei eine Kollision detektiert werden. Bei einer detektierten Kollision muss ein rezessiver Teilnehmer 1 darauf folgend einen erneuten Übertragungsversuch starten, um seine Meldung abzusetzen. Durch einen sofortigen Rückzug eines Teilnehmers 1 mit einer rezessiven Meldung vom Bus, kann dabei sichergestellt werden, dass selbst im Falle eines Konflikts zumindest der dominante Teilnehmer 1 seine Meldung erfolgreich am Bus durchbringt, was auch bei Konflikten einen guten Busdurchsatz ermöglicht.

Das in **Fig. 4** dargestellte Bussystem ist ein viertes Beispiel eines erfindungsgemäßen Kommunikationssystems mit einer sternförmigen Verkabelung der Teilnehmer 1 mit einem gemeinsam genutzten Bus, welche über einem so genannten HUB 4 erfolgt. Dieser HUB 4 kann aktiv oder passiv ausgeführt sein, wobei im passiven Fall auch von einem Knotenpunkt 4 mit Stichleitungen 2 hin zu den Teilnehmern 1 gesprochen wird.

Neben den oben gezeigten Primärformen, können auch komplexere Topologien oder Kombinationen der gezeigten Systeme zur erfindungsgemäßen Kommunikation genutzt werden. Auf Detailaspekte von Realisierungen wie Terminierungen, Leitungsimpedanzen, etc. wird hier nicht eingegangen, sondern auf entsprechende Fachliteratur verwiesen.

Das erfindungsgemäße Verfahren zur Kommunikation zwischen Teilnehmern 1 in einem Messsystem wird im Folgenden anhand von einigen beispielhaften Ausführungsformen beschrieben. Speziell handelt es sich dabei um ein Positionsmesssystem eines Koordinatenmessgeräts mit Messsensoren als Teilnehmer 1.

Im Messsystem erfolgt die Kommunikation der Teilnehmer 1 über ein Bussystem, bei welcher alle Meldungen eines der Teilnehmer 1 von allen weiteren der Teilnehmer 1 empfangen werden. Die Teilnehmer 1 im Messsystem weisen jeweils teilnehmereigene Kommunikationsadressen auf.

Erfindungsgemäß werden diese teilnehmereigenen Kommunikationsadressen insbesondere iterativ ermittelt, indem jeder der Teilnehmer 1 ein Beobachten der Meldungen auf dem Bussystem durchführt. Bei einem Erkennen einer Kollision, also einer Kommunikationsadresse einer empfangenen Meldungen welche gleich der teilnehmereigenen Kommunikationsadresse ist, erfolgt dadurch bedingt eine Vergabe einer geänderten und mit der empfangenen Meldung kollisionsfreien teilnehmereigenen Kommunikationsadresse des Teilnehmers 1 an sich selbst. Insbesondere ist dabei die teilnehmereigene Kommunikationsadresse nur flüchtig im Teilnehmer 1 gespeichert.

Die Teilnehmer 1 des Kommunikationssystems weisen Schnittstellen 3 zum Austausch von Meldungen auf, über welche zwischen den Teilnehmern 1 eine kommunikative Verbindung über das Bussystem herstellbar ist. Diesen Teilnehmern 1 können dabei die unterschiedlichsten Funktionen und Aufgaben zukommen, beispielsweise Sensoren, Aktoren, Gateways, Steuergeräte, etc.

Wie bereits erwähnt, erfolgt die Kommunikation in Form von Meldungen, welche über die Kommunikationsschnittstellen gesendet und/oder empfangen werden können. Es handelt sich bei den Meldungen um digital dargestellte Informationen, welche in Form von - meist paketartig übermittelten - Datenströmen über die Schnittstellen an die anderen Teilnehmer weitergegeben werden. Der Dateninhalt dieser Meldungen ist entsprechend zu interpretieren und weist zumindest eine Kommunikationsadresse und einen Meldungsinhalt auf. Beispielsweise kann eine Meldung eine Präambel, einen Adressbereich, einen Befehlsbereich, einen Datenbereich, einen Checksummenbereich bzw. eine - entsprechend des verwendeten Übertragungsprotokolls definierte - Kombination dieser Bereiche aufweisen.

Dabei kann es im Kommunikationssystem Adressen oder Bereiche von Adresswerten geben, welche einen Broadcast - der alle der Teilnehmer 1 anspricht, einen Multicast - der eine definierte Untermenge der Teilnehmer 1 anspricht und/oder einen Unicast - der nur einen spezifischen Teilnehmer 1 anspricht, bewirken. Im Rahmen der Verarbeitung der Meldung im Teilnehmer 1 kann gegebenenfalls eine Antwort auf die Meldung generiert werden, welche vom Teilnehmer 1 an einen oder mehrere andere Teilnehmer 1 gesendet wird. Die generierte Antwort wird über den Bus an alle weiteren Teilnehmer 1 versendet. Bei manchen Meldungen kann eine Antwort auch ausbleiben und nichts gesendet werden. Es empfangen zwar alle Teilnehmer 1 die versandten Meldungen, aber nur jene Teilnehmer 1 die durch die Zieladresse in der Meldung angesprochen sind, verarbeiten die Meldung.

Die Kommunikation kann im Messsystem insbesondere mit einem zyklischen Abfragen von Sensorwerten vonstatten gehen. Beispielsweise kann die Kommunikation periodisch - z.B. auf Basis eines Messtaktes oder Regeltakts, eventbasiert - z.B. indem durch eine Triggerung ausgelöst ein Erfassen eines Messwerts und durch eine Auslese-Anfrage-Meldung der Capture-Werte der Triggerung erfolgt, oder auch in einer Kombination von beidem erfolgen.

Die Teilnehmer 1 haben dabei aber per se keine ihnen teilnehmerspezifisch eindeutig von außen zugewiesene explizite Adresse. Das erfindungsgemäß angewandte Kommunikationsverfahren ohne äußere Adressvergabe basiert von seinem Grundprinzip her auf einer Beobachtung der BusKommunikation und einem erkennen von allfälligen Adresskonflikten. Wird ein solcher Konflikt von einem Teilnehmer 1 erkannt, so ändert er von sich aus seine Adresse, um weitere Konflikte zu vermeiden. Dieses erfolgt so lange, bis alle Teilnehmer 1 im Kommunikationssystem eine eindeutige Adresse aufweisen.

Bei einer Serienstruktur ohne gemeinsam genutztes Medium wie in Fig. 1 oder Fig. 2 kann ein Konflikt festgestellt werden, wenn von einem Teilnehmer 1 eine Meldung empfangen wird, welche laut Absenderadresse angeblich von ihm gesendet wurde.

Eine Ausnahme kann hier eine geschlossene Ringstruktur wie in Fig. 2 bilden, bei welcher eine eigene Meldung wieder empfangen werden kann. Da die vom Teilnehmer 1 gesendeten Meldungen dem Teilnehmer 1 bekannt sind, kann in einem Ring diese Ausnahme anhand des Meldungsinhalts erkannt und entsprechend anders behandelt werden.

Bei einem gemeinsam genutzten Kommunikationsmedium wie in Fig. 3 oder Fig. 4 kann eine Hardware-Kollision von Meldungen auf der gemeinsamen Ressource Kommunikationsbus auftreten, welche sich durch ein Mithören der eigenen Meldung während des Sendens detektieren lässt. Zudem kann auch hier ein Konflikt bei zeitversetzt übermittelten Meldungen ebenfalls festgestellt werden, wenn - wie oben bei der Serienstruktur beschrieben - eine mit der eigenen Adresse als Absenderadresse versehene Meldung empfangen wird.

Der Konflikt von gleichen Adressen äußert sich dabei jedoch nicht in einem Hardware-Konflikt der Adressen - da gleiche Daten, welche zur gleichen Zeit gesendet wurden, per Definition nicht kollidieren, also auf dem Bus keine Hardware-Kollision hervorrufen.

Ein Erkennen einer Kollision der Kommunikationsadresse kann aber dadurch festgestellt werden, dass zwar in einem Kommunikationsadressenbereich der Meldung kein Konflikt auftrat, jedoch in einem anderen Bereich dieser Meldung ein Konflikt auftrat, insbesondere in einem Nutzdatenbereich der Meldung. Eine Kollision durch eine Kommunikationsadresse einer empfangenen Meldung, welche gleich der teilnehmereigenen Kommunikationsadresse ist somit durch eine kollisionsfreie Übertragung des Bereichs der Kommunikationsadresse der Meldung, aber einer Kollision im Bereich des Meldungsinhalts der übertragenen Meldung, erkennbar. Dies lässt darauf schließen, dass zumindest zwei Teilnehmer 1 zur gleichen Zeit mit der gleichen Kommunikationsadresse jeweils eine Meldung abgesetzt hatten, also keine Kollision von Daten, sondern eine Kollision von mehreren gleichen Kommunikationsadressen vorliegen muss, welcher infolge einer mehrfachen Vergabe dieser Kommunikationsadresse beruht. Diese auf den ersten Blick ungewöhnliche Definition eines Kommunikationsadressenkonfliktes ergibt sich durch ein Nichtkollidieren von zeit- und wertgleichen Meldungen auf dem gemeinsamen Kommunikationsmedium.

Bei einem Dominant-Rezessiv-Ansatz setzt sich jeweils einer der Teilnehmer 1 am Bus durch. Dieser behält seine Adresse. Die oder das sich nicht durchsetzende Gerät kann nun, falls der Konflikt nicht im Adressbereich sondern erst im Datenbereich auftrat, seine Adresse gemäß einer Abbildungsfunktion ändern und mit der neuen Adresse nochmals versuchen zu antworten. Hierbei kann wieder eine Kollision auftreten, die durch das Kollisionsvermeidungsverfahren gelöst wird, und so weiter. Sobald alle Geräte, welche zuvor die gleiche Adresse hatten, ihre Adressen geändert und konfliktfrei auf die Anfrage geantwortet haben, weisen sie unterschiedliche teilnehmereigene Adressen auf. Durch die dabei durchgeführten Adressänderungen können in manchen Fällen einige der Teilnehmer nun durch die vorgenommene Abbildung aber eine Adressen haben, die im Kommunikationsnetzwerk anderweitig bereits vergeben sind.

Um diese Konflikte zu lösen, kann ein Gerät, das eine Meldung empfängt, welche seine Absenderadresse aufweist, seine Adresse ebenfalls nach einer Abbildungsfunktion ändern, um zukünftigen Konflikten a priori vorzubeugen.

Das erfindungsgemäße Verfahren kann dabei eine hohe Kollisionswahrscheinlichkeit bzw. Kollisionserkennungswahrscheinlichkeit der Meldungen durch die Übertragung eines putativ teilnehmereindeutigen Inhalts in den Meldungen sicherstellen. Ein solcher teilnehmereindeutiger Inhalt kann beispielsweise zum einen durch eine im Teilnehmer generierte Zufallszahl in der Meldung oder zum anderen durch einen vom Teilnehmer bestimmten Sensormesswert in der Meldung hergestellt werden.

Somit kann ein Teilnehmer 1, welcher die Kollision seiner Kommunikationsadressen erkennt, unter Anwendung einer Abbildungsfunktion ein Vergeben einer neuen Kommunikationsadressen an sich selbst durchführen, wobei die Abbildungsfunktion vom teilnehmereindeutigen Inhalt abhängen kann. Das Bestimmen der geänderten, kollisionsfreien teilnehmereigenen Kommunikationsadressen kann auch anhand einer Abbildung erfolgen, die durch Einbezug eines Wertes erfolgt, welcher den Unterschied des Konflikts der empfangenen und der gesendeten Meldungen oder einer potentiell zu sendenden eigenen Meldung repräsentiert. Somit können simultane, gleichartige Änderungen der Adresse in mehreren der Teilnehmer und dadurch erneute entstehende Konflikte vermieden werden bzw. deren Wahrscheinlichkeit verringert werden.

Ein Teilnehmer kann während oder nach dem Vergeben einer geänderten Kommunikationsadresse an sich selbst eine Meldung mit seiner alten und seiner neuen Adresse absetzen. Dadurch werden die anderen Teilnehmer von dieser Änderung informiert und können beispielsweise ihre Adresstabellen aktualisieren, oder es können auf Basis dieser Meldung im Falle eines erneuten Konfliktes weitere Änderungen von Adressen in Teilnehmern vorgenommen werden, bis ein eindeutiger Zustand hergestellt ist.

Dabei kann die Vergabe einer geänderten teilnehmereigenen Kommunikationsadresse an sich selbst aktivierbar und/oder deaktivierbar sein. Beispielsweise kann das Deaktivieren infolge eines Empfangs einer speziellen LOCK-Meldung ein oder mehrere der Teilnehmer ihre teilnehmereigenen Kommunikationsadresse flüchtig fixieren und keine Vergabe einer geänderten Kommunikationsadresse an sich selbst mehr durchführen lassen. Auch ein Timeout nach dem letzten Adressbedingten Konflikt auf dem Bussystem kann zum Fixieren der Adresse angewandt werden. Das Aktivieren kann beispielsweise durch eine RESET-Meldung, ein Reset-Signal oder durch Stromlosschaltung der Teilnehmer mit einer dadurch reaktivierten Vergabe einer geänderten Kommunikationsadresse an sich selbst durchgeführt werden.

Eine Kollisionsfreiheit der Meldungsinhalte, z.B. Verbunden mit einem Timeout oder mit einem Abschluss eines Kalibrier- bzw. Referenziervorgangs, kann als ein Kennzeichen einer Konvergenz der Adressiteration detektiert werden, worauf die Vergabe von teilnehmereigenen Kommunikationsadressen wie beschreiben deaktiviert wird. Beispeiswiese können dann auch die dabei bestimmten, eindeutigen teilnehmereigenen Kommunikationsadressen nach der Konvergenz der Adressiteration in einem nichtflüchtigen Speicher abgelegt werden. Speziell können dabei die abgelegten Kommunikationsadressen zukünftig als Startwert für eine spätere, erneute Adressiteration dienen.

Zusätzlich zum Bussystem kann über dieselbe Teilnehmerverkabelung eine Triggerung und/oder eine Synchronisation von teilnehmerinternen, lokalen Taktsignalen für alle der Teilnehmer 1 erfolgen. Derartige Synchronisationsleitungen sind beispielsweise in Messsystemen in Form einer Triggerleitung zur Auslösung von Messungen gebräuchlich. Hierzu werden die Teilnehmer 1 üblicherweise über eine zusätzliche, gemeinsam genutzte Leitung verbunden, über welche die entsprechenden Signale übertragen werden. Insbesondere kann dabei ein kombiniertes Takt-Trigger-Signal genutzt werden, welches alle Geräte parallel anspricht, wie dieses in EP 2 533 022 beschrieben ist. Ein dabei synchronisiertes lokales Taktsignal im Teilnehmer 1 kann dabei zur Taktung der Kommunikation und/oder der Messwerterfassung angewandt werden.

Die Teilnehmer 1 der Messsystem-Kommunikation weisen eine Meldungsverarbeitungseinheit auf, welche derart ausgebildet ist, dass diese ein erfindungsgemäßes Kommunikationsverfahren durchführt. Weiters sind die Teilnehmer 1 mit zumindest einer von der Meldungsverarbeitungseinheit bedienbaren Kommunikationsschnittstelle ausgestattet, über welche eine Kommunikation zu allen weiteren Teilnehmern 1 des Messsystems herstellbar ist.

Zur Generierung eines teilnehmereindeutigen Inhalts kann der Teilnehmer 1 einen Zufallszahlengenerator und/oder einen Messsensor aufweisen.

Im Folgenden sind zur weiteren Erläuterung einige beispielhafte Ausführungsformen von Kommunikationsabläufen in einem erfindungsgemäßen MessmaschinenKommunikationssystem in Tabellenform dargestellt, wobei die Abläufe jeweils chronologisch in Zeilen untereinander dargestellt sind. Diese Aufzählung ist jedoch nicht abschließend, sondern dient lediglich zur Erläuterung des erfindungsgemäßen Kommunikationsprinzips.

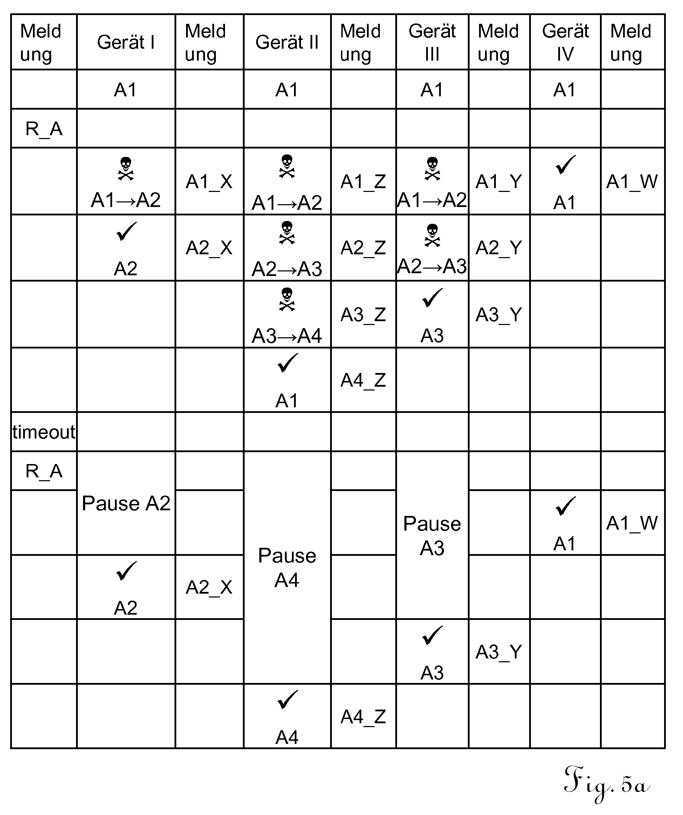

**Fig. 5a** zeigt ein erstes Beispiel eines Ablaufs einer erfindungsgemäßen Kommunikation, bei welcher nach dem Einschalten - z.B. von einem Steuergerät oder Messmaschinencontroller - eine zum Senden aller jeweiligen Sensorsignale auffordernde Anfrage auf dem Bus abgesetzt wird. Darauf antworten alle vorhandenen Busteilnehmer und ändern dabei gegebenenfalls nach oben beschriebenem Schema ihre Adressen, falls dabei Adressenkonflikte auftreten. Danach haben alle teilnehmenden Geräte unterschiedliche Adressen, was gegebenenfalls vom Steuergerät durch nochmaliges Absetzen einer Anfrage an alle Teilnehmer verifiziert werden kann.

Eine derartige, automatische Adressvergabe kann beispielsweise bei jedem Einschalten von neuem erfolgen. Dadurch müssen die Teilnehmer nicht über nichtflüchtige Speicher zur Ablage ihrer Adresse verfügen.

Im Detail sind in den Spalten jeweils die Teilnehmer als Gerät I bis IV und die zwischen ihnen ausgetauschten Meldungen dargestellt. Die Geräte sind dabei alle mit einem Bussystem mit einem gemeinsamen, von Gerät zu Gerät durchgeschleiften Kommunikationsmedium verbunden und kommunizieren über dieses mit jeweils allen anderen Teilnehmern. Die Zeilen stellen nach unten hin einen chronologischen Ablauf dar, welcher keinen Anspruch auf Vollständigkeit hat.

Wie in der ersten Zeile dargestellt haben alle Geräte nach dem Einschalten oder einem Reset des Kommunikationssystems, eine gleiche Adresse, in diesem Beispiel A1. Eines der Geräte, welches hier nicht dargestellt ist, z.B. ein Steuergerät oder Messmaschinencontroller, sendet eine Anfrage R_A an alle Teilnehmer, also einen Broadcast mit dem Inhalt "Sendet alle eure Sensorsignale", was in Zeile 2 dargestellt ist.

Daraufhin antworten, wie in Zeile 3 gezeigt, alle Geräte gleichzeitig mit einer Meldung, welche zumindest aus der teilnehmereigenen Adresse und den teilnehmerspezifischen Sensorwerten aufgebaut ist. Beispielsweise also Gerät I mit der Meldung A1_X, wobei X den aktuellen Messwert des Geräts darstellt, Gerät II mit der Meldung A1_Z, usw.

Dabei setzt sich auf dem dominant-rezessiv gestalteten Bussystem der Teilnehmer IV mit der dominantesten Meldung A1_W durch. Teilnehmer IV behält seine Adresse bei, die anderen Teilnehmer erkennen einen Konflikt und ändern infolge dessen ihre eigene Adresse.

Dabei ist in jedem Teilnehmer eine Abbildung für die Meldungskennung x hinterlegt. Diese ist in vorteilhafter Weise derart ausgebildet, dass die durch die Abbildung generierte, geänderte Kommunikationsadresse potentiell konfliktfrei ist. Ohne Beschränkung der Allgemeinheit wird zur Erläuterung des Prinzips im der Figur eine Adresse x in Form von einer Nummer aus dem Bereich der ganzen Zahlen und eine Abbildungsfunktion der Adresse x in Form von f(x)=x+1 verwendet, welche hier als Adresse Ax dargestellt wird. In praktischen Implementierungen können Art und/oder Wertebereich der Adresse sowie die Abbildungsfunktion auch anders, insbesondere komplexer, sein. Der Anschaulichkeit halber wird hier aber zur Erläuterung des erfindungsgemäßen Prinzips auf dieses einfache Beispiel zurückgegriffen. Wie hier gezeigt ändern die nicht mit ihrer Meldung durchgekommenen Geräte also ihre Adresse von A1 auf A2. Eine Abbildung kann dabei auch als eine Funktion eines vom Gerät erfassten Messwertes S in Form von x=f(x,S) erfolgen. Beispielsweise kann eine Hash-Funktion des Messwertes S oder die niederwertigen, meist instabilen Bits eines rohen Messwerts eines Sensors als neue Adresse genutzt werden, welche auch mit der alten, konfliktbehafteten Adresse verrechnet werden kann. Da jeder Teilnehmer mit hoher Wahrscheinlichkeit einen unterschiedlichen Messwert erfasst, ist auch dieser Hash-Wert mit hoher Wahrscheinlichkeit unterschiedlich und die resultierende Adresse somit eindeutig.

In Zeile 4 versuchen die zuvor nicht erfolgreichen Teilnehmer, erneut ihre Meldungen mit ihrer neuen Adresse A2 durchzubringen, was Teilnehmer I auch gelingt.

In Zeile 5 versuchen nunmehr Gerät II und III erneut, ihre Meldungen mit der nunmehr zu A3 geänderten Adresse durchzubringen. Dabei setzt sich Gerät III mit der Meldung A3_Y gegenüber der Meldung A3_Z durch.

Letztendlich bringt in Zeile 6 auch der Teilnehmer II seine Meldung A4_Z durch, nachdem er sich selbst aufgrund der vorangegangenen Konflikte seine Adresse auf A4 geändert hat.

Das Steuergerät kann dabei warten, bis es für eine bestimmte Zeitdauer keine Meldungen mehr empfängt, was darauf schließen lässt, dass alle Teilnehmer erfolgreich waren.

Dabei kann jedoch bei der automatischen Adressvergabe die Zuordnung zu den Geräten bei jeder Vergabe unterschiedlich ausfallen. Insbesondere bei Verwendung von Sensorsignal-Informationen in den Meldungen zur Herstellung einer hohen Kollisionswahrscheinlichkeit, kann dabei jedoch die Adressvergabe und Reihenfolge der Geräte abhängig von den Messwerten bei jeder Vergabe unterschiedlich ausfallen und daher insbesondere auch nicht bekannt sein.

Falls die Adressen-Geräte-Zuordnung in diesem Kommunikationssystem nicht von Bedeutung ist, stellt dies kein weiteres Problem dar. Falls die Reihenfolge der Geräte und deren Zuordnung zu Funktionen, etc. für die Anwendung jedoch wesentlich ist, so kann diese darauf folgend anhand der Messwerte der jeweiligen Teilnehmer 1 im Kommunikationssystem ermittelt werden. Dazu kann im Rahmen einer initialen Referenzierung oder Kalibrierung des Messsystems eine definierte Stimulation der Sensoren der Teilnehmer ausgeführt werden, insbesondere in einer definierten Abfolge. So kann etwa ein Referenzieren oder Kalibrieren von Bewegungsachsen, z.B. im Rahmen einer in WO 2011/064317 beschriebenen Selbstkalibration, insbesondere in einer vorgegebenen Reihenfolge ausgeführt werden, wodurch der jeweilige Teilnehmer zur Lagenerfassung dieser Bewegungsachsen anhand der sich bei der Referenzierung ändernden Messwerte der Bewegungsachse zuordenbar ist. Es kann somit die Reihenfolge der Teilnehmer bzw. deren Funktions-Zuordnung anhand der Reihenfolge der Bewegungsachsenreferenzierungen oder Kalibrierung bestimmt werden.

In den bevorzugten Ausführungsformen eines erfindungsgemäßen Meßsystems, bei welchen die Adressen-Geräte-Zuordnung von Bedeutung ist, also die Reihenfolge der Geräte im Messsystem oder anders gesagt die Zuordnung der iterierten Kommunikationsadressen zu Funktionen, Aufgaben, Positionen, Montageorten, etc. des Teilnehmers im Messsystem für die Anwendung wesentlich ist, wird diese erfindungsgemäß anhand der Messwerte der jeweiligen Teilnehmer 1 im Kommunikationssystem ermittelt, insbesondere während oder im Anschluss an die Adressiteration, speziell beim Inbetriebnahme des Messsystems in seiner aktuellen Konfiguration. Dazu wird im Rahmen einer initialen Referenzierung oder Kalibrierung des Messsystems, eine definierte Stimulation der Sensoren der Teilnehmer ausgeführt, insbesondere z.B. in einer definierten Abfolge. Definiert ist hierbei dahingehend zu verstehen, dass die Stimulation der Teilnehmer zumindest eine bekannte Charakteristik aufweist, an welcher einer oder mehrere der Teilnehmern bei der Referenzierung oder Kalibrierung in seiner Funktion und/oder Position im Messsystem identifizierbar ist. Die konkrete Ausgestaltung kann dabei stark vom Aufbau des Meßsystems abhängen, weshalb die im Folgenden angeführten Beispiele nicht als abschließend zu betrachten sind.

Eine derartige Initialisierung bzw. Referenzierung ist bei Meßsystem wie z.B. Koordinatenmessgeräten speziell nach dem Einschalten, einem Tastkopfwechsel, einer Änderung der Stationierung, etc. ohnehin erforderlich und Üblich. Mit Messsensorik ausgestattete Teilnehmer, speziell deren Auswertungs-Hardware und Software, benötigen bei der Erstinbetriebnahme, nach dem Einschalten, und/oder bei geänderten Umgebungsbedingungen oft ein solche Stimulation um sich zu initialisieren. Beispielsweise führen die Teilnehmer dabei eine Selbstkalibrierung durch, bei welcher Kompensationsparameter zur Erzeilung einer hohen Genauigkeit der Sensorwerterfassung ermittelt werden. Die Teilnehmer können jedoch auch vor Beendigung einer solchen Kalibrierung und/oder Referenzierung bereits Messdaten liefern, welche zwar nicht unbedingt die volle erreichbare bzw. spezifizierte Genauigkeit oder Bezugsbasis aufweisen, jedoch für Identifikationszwecke bei einer erfindungsgemäßen Adressvergabe hinreichend sind.

So kann etwa ein Referenzieren oder Kalibrieren von Bewegungsachsen (z.B. bei der erwähnten Selbstkalibration aus WO 2011/064317), nicht nur in einer vorgegebenen Reihenfolge der Stimulation der Teilnehmer durch Bewegen des Positionsgebers ausgeführt werden, sondern etwa auch z.B. anhand des Wertebereichs des jeweiligen Teilnehmers, anhand von Abhängigkeiten zwischen mehreren Teilnehmermesswerten, anhand von Messwerten bei einem oder bei mehreren bekannten Referenzpunkten oder Differenzen zwischen diesen, anhand von Messwert-Änderungen beim Abfahren eines bekannten Referenzmusters, anhand von physikalisch bedingten Abhängigkeiten zwischen Sensorwerten unterschiedlicher Teilnehmer, anhand von Messbereichen (etwa anhand von unterschiedlichen Längen von Bewegungsachsen, erfassbaren Winkelbereichen von Drehgebern, ..., insbesondere beim Abfahren des vollen Verfahrbereichs im Rahmen einer Initialisierung, Referenzierung oder Kalibrierung), etc. erfolgen.

Erfindungsgemäß kann diese, meist ohnehin benötigte Zeit und Stimulation der jeweiligen Teilnehmer für eine derartige Selbstkalibration nicht nur zur Adressiteration, sondern auch zur Identifikation der Sensorwerterfassung anhand der sich bei der Referenzierung ändernden Messwerte genutzt werden, also der Teilnehmer mit seiner iterierten Kommunikationsadresse seiner jeweiligen Funktion und/oder Position im Messsystem zugeordnet werden. Beispielsweise kann bei einer Bewegungsachse der dieser jeweils physikalisch zugehörige Teilnehmer, also etwa ein Positionssensor oder Positionsgeber für diese Bewegungsachse, anhand der von diesem erfassten Lagewerten während der Referenzierung identifiziert und insbesondere seiner iterierte Kommunikationsadresse zugeordnet werden. Beispielsweise kann der Positionssensor anhand der sich bei der Referenzierung nach einem bekannten Schema verändernden Messwerte, als einer bestimmten Bewegungsachse zugehörig identifiziert werden.

Im Folgenden kann dieser Positionssensor durch seine Kommunikationsadresse explizit angesprochen werden bzw. können von diesem übermittelte Messwerte dieser Bewegungsachsen zugeordnet werden. Es kann somit im Rahmen einer Kalibrierung oder Referenzierung neben der automatischen Adressiteration auch die Reihenfolge der Teilnehmer bzw. deren Funktions-Zuordnung anhand der Reihenfolge der Bewegungsachsenreferenzierungen oder Kalibrierung ermittelt werden.

Dabei ist keine Abfrage und Datenhaltung von eindeutigen Daten der Teilnehmer wie Seriennummern oder dergleichen erforderlich. Es können also beispielsweise Teilnehmer beliebig gewechselt, vertauscht oder ergänzt werden, ohne dass dabei am Teilnehmer oder sonst am Messsystem Anpassungen erforderlich sind. Mehrere oder alle der Teilnehmer können vor der Anwendung der vorliegenden Erfindung also Beispielsweise, insbesondere aus Sicht des Kommunikationsbusses, auch exakt gleich sein, was wie erwähnt z.B. Lagerhaltung und Service deutlich vereinfacht. Speziell müssen die Teilnehmer also keine Unterschiede (wie etwa eine eindeutige Kennung) in ihrer Software oder in einem Speicherbaustein aufweisen, um als Basis zur Adressierung und/oder Identifizierung herangezogen zu werden. Bei der erfindungsgemäßen Adressvergabe ist ein Auslesen einer Seriennummern oder einer anderen im Teilnehmer codierten teilnehmerspezifischen Kennung nicht zwingend erforderlich.

Bei einem Messsystem mit Positionswertgebern, wie etwa einer CMM oder eines Articulated Arms, eines Theodoliten, etc. können die Bewegungsachsen im Rahmen einer, insbesondere initialen, Kalibrierung definiert stimuliert werden, indem z.B. die Geräteachsen bewegt werden. Eine solche Bewegung der Achsen ist bei derartigen Messsystemen zur Kalibrierung meist ohnehin erforderlich, etwa für eine Selbstkalibration der Positionswertgeber bei welcher Kompensationsparameter für die Sensorik und Auswerteschaltungen der Teilnehmer ermittelt werden, wie z.B. in WO 2011/064317 beschrieben, oder zur Kalibration und/oder Referenzierung des gesamten Messsystems. Zwar benötigen die Positionsgeber diese Kompensationsparameter für die in der Anwendung erforderliche hochgenaue Positionsbestimmung, jedoch sind die ohne bzw. mit nicht exakt bestimmten Kompensationsparametern bestimmten Messwerte, (welche entsprechend ungenauer sein können) aber hinreichend für eine Identifizierung der Teilnehmer bezüglich deren Position und/oder Funktion. Bei derartigen Messsystemen kann die Adressiteration und/oder Identifizierung also ohne zusätzlichen Arbeitsaufwand und Zeitverlust erfolgen.

Eine solche Kalibration und/oder Referenzierung des Messsystems kann etwa durch Anfahren von einem oder mehreren Referenzpunkten, Positionierung in eine oder mehrere definierte Stellungen (z.B. bei einer Zweilagen-Messung), Abfahren eines Referenzpfades, Bewegung über den gesamten Messbereich des Positionswertgeber, Ausführung einer definierten Abfolge der Bewegungen der einzelnen Achsen, Bewegung einer Achse bis ein zugehöriger End- und/oder Referenzschalter anschlägt, ausgeführt werden. Auch kann eine Beobachtung von konstruktionsbedingten physikalischen Abhängigkeiten zwischen den Messwerten unterschiedlicher Teilnehmer (z.B. Drehachse + Neigungssensor, messender Tastkopf + Maschinenbewegungsachsen, Näherungssensor + Positionswertgeber, Sensor eines Motorregelkreises (Strom/Drehmoment, Geschwindigkeit, Position, etc.) + dieser Achse zugehörigem Positionsmaßstab etc.), angewandt werden, oder ein Berührung eines Temperatursensors mit der Hand sodass dessen Messwert über die Raumtemperatur steigt als definierte Stimulation genutzt werden. Anhand von derartigen definierten Stimulationen von jeweils zumindest einem Sensorwert von zumindest einem der Teilnehmer, kann dieser Teilnehmer identifiziert werden und seine iterierte Kommunikationsadresse diesem Teilnehmer, also dessen Position und/oder Funktion im Messsystem zugeordnet werden. Erfasst ein Teilnehmer mehrere Sensorwerte (z.B. Temperatur und Position oder ähnliches), so genügt entsprechend eine Stimulation eines der Sensorwerte des Teilnehmers. Die Stimulation kann dabei manuell mit der Hand oder mittels die Sensoren der Teilnehmer beeinflussenden Aktoren erfolgen.

Somit kann die Kommunikation der Teilnehmer den Sensoren des Systems zugeordnet werden, ohne dass die Teilnehmer von außen vorgegebene Adressen haben. Die Adressen müssen dabei nicht einmal fix oder bei jeder Iteration gleich sein, können also bei mehreren Iterationen durchaus auch unterschiedlich ausfallen, oder es können unterschiedliche Anzahlen oder Ausprägungen von Teilnehmern vorhanden sein. Es kann beim erfindungsgemäßen Prinzip beispielsweise auch ein hinzufügen, entfernen oder auswechseln von Teilnehmern erfolgen, insbesondere auch als so genanntes Hotplugging während des Betriebs, beispielsweise bei einem manuellen oder automatischen Werkzeug bzw. Tastkopfwechsel einer CMM bei welchem etwa Bewegungs- oder Messachsen- hinzukommen, wegfallen oder ausgetauscht werden können. Insbesondere bei hochgenauen CMMs ist im Anschluss an einen derartigen Wechsel oder Konfigurationswechsel ohnehin eine Referenzierung bzw. Kalibrierung erforderlich um die gewünschte Genauigkeit sicherzustellen. Im Rahmen einer solchen Referenzierung bzw. Kalibrierung können mit dem erfindungsgemäßen Prinzip die neuen oder geänderten Teilnehmer in das Kommunikationssystem des Messsystems eingebunden werden. Dabei können alle oder einige der Teilnehmer, insbesondere aus Sicht der Kommunikationsschnittstelle und/oder Kommunikationssoftware exakt gleich sein und es muss z.B. keine eindeutige Seriennummer der Teilnehmer bei der Identifikation ausgelesen/benutzt werden bzw. muss eine solche mittels des Kommunikationsbusses nicht zwingend zugänglich sein.

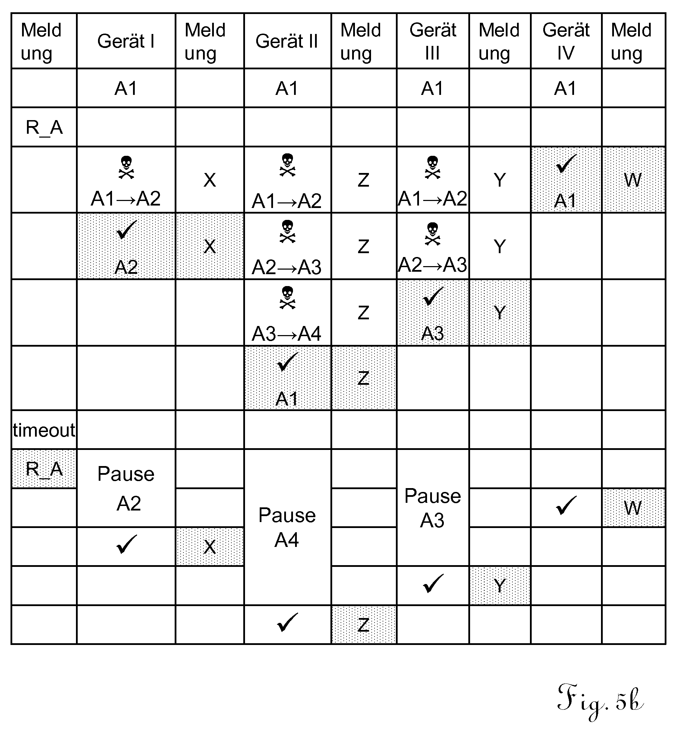

Im unteren Teil von Fig. 5a ist dann nach der obigen, initialen Herstellung von eindeutigen Adressen ein Beispiel für einen regulären Kommunikationsbetrieb gezeigt. Auf eine erneute Anfrage R_A vom Steuergerät des Messsystems, übermitteln alle Teilnehmer mit ihren Adressen ihre Werte. Dabei kann wiederum eine Sendepriorisierung nach dem Dominant-Rezessiv-Ansatz zur Anwendung kommen, bei welcher nunmehr die Dominanz schon durch den Adressbereich der Meldung festgelegt ist. In der Figur gezeigt ist aber eine andere Variante, in welcher Kollisionen a priori vermieden werden, indem vor dem Senden der Antwortmeldung auf die Broadcast-Anfrage von jedem Teilnehmer eine von seiner Adresse abhängige Wartezeit Pause_A1, usw. gewartet wird. Durch dieses Timeslot-Verfahren können Zugriffskonflikte präventiv vermieden werden, und es wird - wie beim Dominant-Rezessiv-Ansatz - die zeitliche Reihenfolge der Antworten festgelegt. Alternativ kann die jeweilige Wartezeit auch während der Initialisierungsphase gesetzt werden und somit die Antwortreihenfolge festgelegt werden. Durch die festgelegte Reihenfolge könnte daher sogar auf das übermitteln der Absenderadresse verzichtet werden und somit die Kommunikationseffizienz gesteigert werden. Es lässt sich in der in **Fig. 5b** gezeigten Ausführungsform somit bei einem einfachen Messsystem mit nur Broadcast-Anfragen zur Auslesung von Sensor- und/oder Triggerwerten quasi gänzlich auf explizit bekannte Adressen verzichten. Die in der Fig. 5b dargestellten Adressen A1 bis A4 degradieren dabei quasi zu teilnehmerinternen Wartezeit-Parametern, beispielsweise in Form einer Anzahl von zu wartenden Zeitschlitzen mit der Länge, welche der Zeitdauer einer Übertragung eines Messwertes auf dem Bus entspricht. Bei einem Konflikt auf dem Bus erhöht ein Teilnehmer mit einer rezessiven Meldung diese Wartezeit (Pause_ in der Figur) jeweils um einen solchen Zeitschlitz. Da ohnehin ein Mithören der ganzen Kommunikation erfolgt, können alternativ auch die Antwortmeldungen der anderen Teilnehmer gezählt und die Wartezeit dynamisch, anhand der Anzahl der zuvor versandten Meldungen der anderen Teilnehmer ermittelt werden.

Somit lösen sich die Konflikte analog zu dem im Fig. 5a dargestellten Schema, wobei in den Meldungen die Adressbereiche Ax_ entfallen und nur mehr die Sensorwerte übermittelt werden. Vor deren Übermittlung wird dabei die Wartezeit Ax gewartet. Die Adressen repräsentieren somit nurmehr teilnehmerinterne, flüchtig gespeicherte Delay-Werte oder Wartezeiten.

Im oberen Teil der Figur sind hier keine Wartezeiten dargestellt. Nach einer Kollision ist eine derartige Wartezeit auch nicht erforderlich, da ohnehin im nächsten Zeitschlitz bzw. nach Abschluss der vorherigen Meldung erst ein erneuter Übertragungsversuch gestartet wird, was ebenfalls einer um eins erhöhten Wartezeit gleichkommt.

Die Teilnehmerreihenfolge ergibt sich eindeutig aus der Reihenfolge der ankommenden Meldungen. Somit kann eine einfache und effiziente Kommunikation in einer Messmaschine realisiert werden, welche keine äußere Vergabe von Adressen an die Teilnehmer, etwa in Form von Codierungen, benötigt, sondern in welcher sich die Teilnehmer von sich aus eindeutige Adressen vergeben, welche in dieser Ausführungsform als teilnehmerspezifische Wartezeiten zur konfliktfreien Kommunikation genutzt werden (und nicht zwingend explizit nach außen hin kommuniziert werden müssen). Eine eindeutigen Zuordnung von Messwerten zu den Teilnehmern ist dabei aufgrund der Antwortreihenfolge ebenfalls gegeben und eine Zuordnung der Teilnehmer zu den Messachsen kann wie beschreiben im Rahmen einer ohnehin nötigen Kalibrierung oder Referenzierung durchgeführt werden.

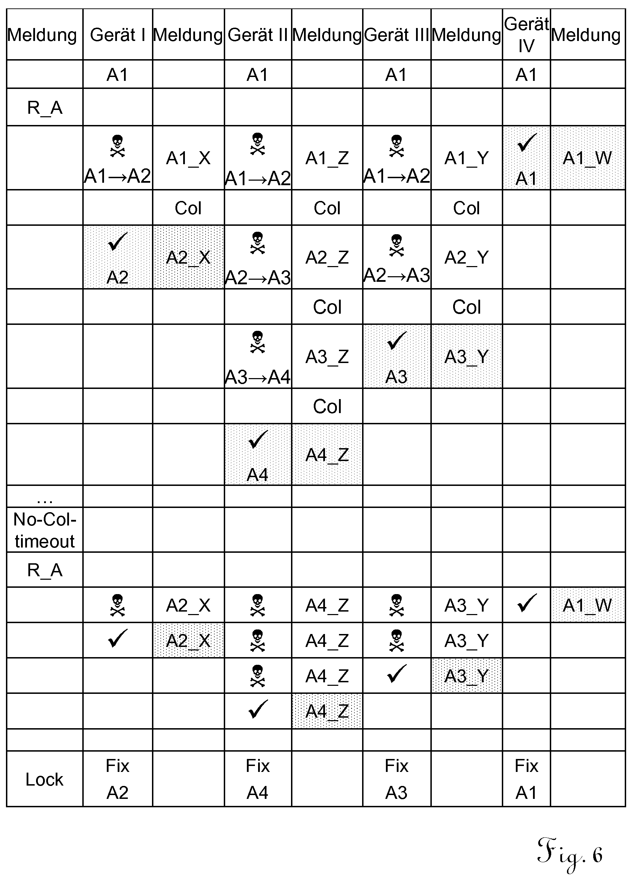

**Fig. 6** zeigt ein drittes Beispiel eines Ablaufs einer erfindungsgemäßen Kommunikation. Der obere Teil der Kommunikation ist in seinem Ablauf ähnlich jenem von Fig. 5. Die dominanten Meldungen sind jeweils grau hinterlegt dargestellt. Im Gegensatz zu vorher wird hier bei Detektion einer Adresskollision von dem betroffenen Teilnehmer eine Kollisionsmeldung Col versandt, um andere Teilnehmer auf den vorhandenen Adresskonflikt hinzuweisen. Die Kollisionsmeldung kann, neben einem schieren Hinweis auf das Vorhandensein einer Kollision, auch weitere Informationen enthalten, z.B. eine Information über die Kollision oder über die augrund dieser vorgenommenen Adressänderung, etwa in Form von alter und neuer Adresse sowie noch weiteren, den Konflikt betreffenden Informationen.

Nachdem auf dem Bus nach einer gewissen Zeit keine Kollisionsmeldung mehr auftrat, sollten alle Teilnehmer sich selbst eindeutige Kommunikationsadressen zugewiesen haben, was im Diagramm durch No-Col-timeout dargestellt ist.

Als Beispiel kann daraufhin eine Kommunikation in Form eines Broadcasts R_A, welcher alle Teilnehmer anspricht, durchgeführt werden, bei welcher jeder Teilnehmer eine Antwort mit seinen Messdaten zurücksendet. Beispielsweise kann in einem Messgerät mit einer derartigen Kommunikation ein Istwert oder ein gepufferter Messwert einer vorausgegangenen Triggerung von allen Lagesensoren abgefragt werden. Die Teilnehmer Geräte I bis IV kennzeichnen ihre Meldungen mit dem Sensorwert und mit ihrer zuvor selbst bestimmten, teilnehmerspezifischen Adresse.

Anhand dieser Adresse ist nicht nur die Zuordnung von Messwert zu Gerät sichergestellt, sondern die Adresse dient auch zur Vergabe der Kommunikationsleitung. Auf die Anfrage R_A folgend, versuchen alle Teilnehmer ihre Antwort zu senden, jedoch gelingt dies nur dem Teilnehmer IV, da dieser die dominante Meldung hat. Hierbei ergibt sich aber im Unterscheid zu vorhin die Kollision im Adressbereich der Meldung und nicht wie bei Adresskonflikten im Datenbereich. Es handelt sich daher um keinen Adresskonflikt, sondern um einen gewöhnlichen Zugriffskonflikt auf die gemeinsame Resource, welcher durch einen sofortigen Rückzug der rezessiven Teilnehmer gelöst wird. Bei einem solchen Konflikt wird keine Vergabe einer neuen Adresse in einem der Teilnehmer bewirkt. Die Unterscheidung, ob der Konflikt in einem Adressbereich oder einem Datenbereich der Meldung stattfand, kann daher als Kriterium angewandt werden, ob eine Adressänderung durchgeführt wird oder nicht.

In den folgenden Zeilen, in welchen von den restlichen Teilnehmern erneut versucht wird, die zuvor rezessiven Meldungen durchzubringen, werden nun nach und nach - geordnet nach ihrer Dominanz (welche insbesondere von der Teilnehmeradresse abhängt) - die Meldungen aller Teilnehmer übermittelt.

Somit kann eine Zuordnung der Meldungen zu den Geräten nicht nur über die Adressen, sondern auch über die Reihenfolge der Ankunft der Meldungen hergestellt werden.

In der untersten Zeile ist das Übermitteln einer LOCK-Meldung gezeigt, mit welchem alle angesprochenen Teilnehmer ihre derzeitige teilnehmereigene Adresse temporär fixieren. Daraufhin werden von diesen fixierten Teilnehmern selbst bei Kollisionen keine weiteren Änderungen ihrer eigenen Adresse mehr vorgenommen. Diese LOCK-Meldung kann dabei wie gezeigt als globaler Broadcast an alle Teilnehmer, aber auch - anhand der teilnehmereigenen Adressen - spezifisch auf bestimmte Teilnehmer oder Teilnehmergruppen gerichtet sein.

Somit kann beispielsweise beim Hinzukommen eines weiteren Teilnehmers verhindert werden, dass die bereits vorhandenen Teilnehmer ihre Adressen ändern. Auch bei Konflikten durch allfällige Übertragungsfehler in der Kommunikation kann somit ein unnötiges Ändern von Adressen vermieden werden. Um dabei eine Dominanz des neu hinzukommenden Teilnehmers zu verhindern, kann eine fixierte Adresse beispielsweise mit einem hoch-dominanten Bit in seiner Adresse gekennzeichnet werden, durch welches jede Meldung eines hinzukommenden Teilnehmers mit nicht fixierter Adresse jedenfalls rezessiv ist.

Dieses Fixieren kann beispielsweise durch eine Reset-Meldung, ein Reset-Signal oder ein Stromlosschalten der Teilnehmer wieder rückgängig gemacht werden.

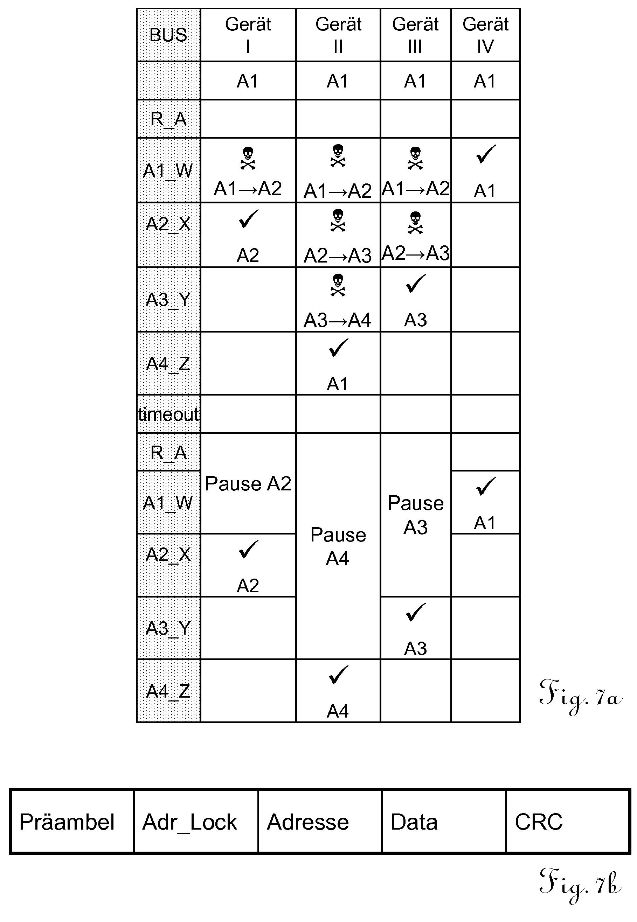

**Fig. 7a** zeigt ein viertes Beispiel eines Ablaufs einer erfindungsgemäßen Kommunikation. Das gemeinsam genutzte Kommunikationsmedium ist als nur eine einzige, grau hinterlegte Spalte BUS dargestellt, in welcher jeweils die dominante Meldung gezeigt ist. Der Ablauf ist ähnlich zu jenem von Fig. 5a bzw. ähnlich zu Fig. 5b, wenn hier wiederum bei den Meldungen auf dem Bus der Ax_ Präfix gestrichen wird.

**Fig. 7b** zeigt eines von vielen Beispielen, wie eine Meldung aufgebaut sein könnte. Dieses ist nicht als limitierend anzusehen, da es unzählige Möglichkeiten zur Gestaltung von Meldungen in einem erfindungsgemäßen Kommunikationssystem gibt, welche um entsprechende Bereiche ergänzt oder gekürzt werden können.

Das gezeigte Meldungsbeispiel weist eine Präambel, also z.B. ein Startbit, etc. auf. Im Anschluss folgt ein optionaler, oben beschriebener Adr_Lock Bereich, um fixierte Adressen zu kennzeichnen, z.B. in Form eines LOCK-Bits. Der Adressbereich der Meldung enthält die flüchtig gespeicherte, teilnehmerspezifische Adresse, als z.B. A1, A2, A3, A4 aus den obigen Beispielen. Der Datenbereich Data kann die Sensorwerte, aber auch andere Befehle und/oder Daten enthalten. Die Meldung schließt mit einer Checksumme CRC, mit welcher die Datenintegrität der Meldung feststellbar und/oder auch eine Fehlerkorrektur von Übertragungsfehlern durchführbar ist.

Eine dominant-rezessive Übertragung kann in einfacher Weise beispielsweise durch eine mit einem Pullup-Widerstand versehene Leitung realisiert werden, welche zum Senden in den Teilnehmern jeweils durch einen Schalter auf GND geschaltet werden kann um ein dominantes Bit zu übertragen. Das Mithören kann durch ein einfaches Auswerten des aktuellen Pegels der Leitung realisiert werden. Dabei kann eine einfache, hinlänglich bekannte UART-Kommunikation genutzt werden. Es sind hierzu aber auch einige kompliziertere Ansätze, etwa in Form von integrierten Schaltkreisen wie CAN-, RS485- oder anderen Treiberbausteinen verfügbar.

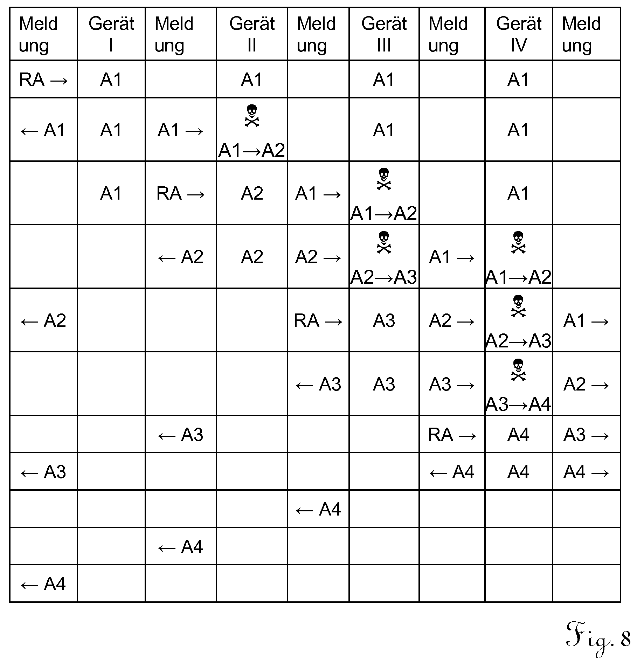

**Fig. 8** zeigt ein fünftes Beispiel eines Ablaufs einer erfindungsgemäßen Kommunikation, bei welcher die Geräte in einer Serienstruktur nach Fig. 1 oder Fig. 2 angeordnet sind und die Teilnehmer entsprechend jeweils links und rechts mit je einem Nachbarn kommunizieren. Empfangene Meldungen werden jeweils auf der anderen Seite weitergeleitet, sodass eine Meldung immer alle der Teilnehmer erreichen kann. Meldungen welche aufgrund einer belegten Kommunikationsschnittstelle nicht gleich gesendet werden können, werden im Teilnehmer zwischengespeichert und erst im Anschluss verschickt. Im hier dargestellten Fall ist also zur Vermeidung von Zugriffskonflikten auf Schnittstellenebene ein Zwischenspeichern von empfangenen und/oder vom jeweiligen Gerät selbstgenerierten Meldungen implementiert.

Auf die Anfrage RA hin sendet Gerät I die Meldung mit dem Absender A1 an alle übrigen Teilnehmer, also nach links und rechts. Darauffolgend wird die Meldung RA ebenfalls an Gerät II weitergeleitet.

Gerät II empfängt in Folge eine Meldung mit A1, erkennt dabei einen Konflikt mit seiner eigenen Adresse, welche auch A1 lautet, und ändert diese auf A2. Weiters wird die Meldung mit A1 auch an Gerät III weitergeleitet. Auf die nun folgende Anfrage RA sendet Gerät II eine Meldung mit seiner geänderten Adresse A2 nach links - wo diese von Gerät I weitergeleitet wird - und nach rechts. Die ebenfalls anstehende Meldung RA wird im Anschluss an Gerät III weitergeleitet.

Gerät III erkennt die Konflikte mit den empfangenen Meldungen A1 und A2 und ändert seine Adresse auf A3. Zudem leitet es A1 und A2 an Gerät IV weiter. Auf Empfang der Meldung RA hin sendet es A3 nach links und rechts, wo diese Meldung jeweils weitergeleitet wird, und leitet auch RA an Gerät IV weiter.

Analoges geschieht bei Gerät IV und so fort.

Somit haben alle Teilnehmer sich selbst teilnehmereindeutige Adressen A1 bis A4 vergeben. Deren Reihenfolge entspricht in diesem Fall der physikalischen Reihenfolge der Teilnehmer im Bussystem. Bei anderen Abbildungen der Adressen oder anderen Sendereihenfolgen könnte die Reihenfolge auch anders ausfallen, sie ist jedoch bei jedem Einschalten gleich.

Sowohl bei einem Bus mit gemeinsamem Medium als auch bei einer Serienstruktur kann in einer weiteren alternativen, weiterführenden Ausgestaltung bzw. Erweiterung zusätzlich jedes Gerät, welches seine Adresse ändert, eine Anfrage-Meldung an diese neue, geänderte Adresse generieren und senden. Wird auf diese Anfrage hin eine Antwort empfangen, so ist die geänderte Adresse bereits vergeben, und es wird die Adresse solange weiter angepasst, bis eine Antwort ausbleibt und somit kein weiterer Teilnehmer am Kommunikationssystem dieselbe Adresse hat. Eine derartige Überprüfung der Eindeutigkeit der eigenen Adresse kann dabei im Anschluss an die zuvor beschriebene Kollisionsauflösung anhand einer ersten, globalen Anfrage erfolgen, also wenn alle Teilnehmer zu dieser globalen Anfrage erfolgreich antworten konnten.

Somit kann ein so genannter "Deadlock", bei welchem mehrere Sensoren ständig Ihre Adresse ändern und kein stabiler Endstatus erreicht wird (oder dessen Erreichung immense Zeiten in Anspruch nimmt), vermieden oder zumindest dessen Wahrscheinlichkeit verringert werden. Um das Auftreten eines derartigen "Deadlocks" noch unwahrscheinlicher zu gestalten, kann bei jeder Anfrage eines Teilnehmers die sich selbst neu vergebene Adresse wiederum gemeinsam mit einem potentiell teilnehmerspezifischen Sensorsignal abgesetzt werden. Somit wird, falls eine derartige Anfrage an die eigene Adresse von mehreren Geräten gestellt wurde, eine Erkennung des dabei auftretenden Konfliktes ermöglicht. Das sich dabei nicht durchsetzende Gerät kann aufgrund dieser Erkenntnis seine Adresse erneut ändern, wohingegen das sich durchsetzende Gerät seine Adresse beibehält.

Die in obigen Beispielen verwendeten Adressen A1...A4 sind rein beispielhaft für die anschauliche Erläuterung des erfindungsgemäßen Kommunikationsprinzips zu sehen. Die Adressen können im praktischen Einsatz auch abstrakter, insbesondere in Form von digitalen Codierungen implementiert sein. Auch das hier beispielhaft erläuterten, in den Geräten hinterlegten Abbildungsfunktionen und Auswertungen von Konflikten können entsprechend komplexer sein. Insbesondere müssen die Adressen sowie deren Abbildungen nicht in menschenlesbarer Form ausgeführt sein.

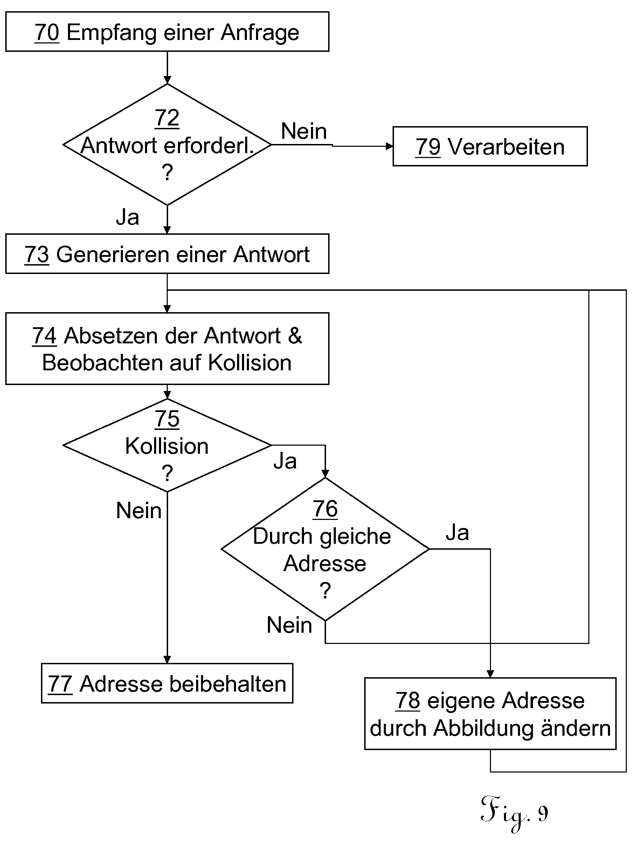

**Fig. 9** zeigt ein erstes Beispiel eines Ablaufs einer erfindungsgemäßen Kommunikation in einem Ablaufdiagramm. Eine vom Teilnehmer in Block 70 empfangene Meldung wird ausgewertet und - insofern in Block 72 festgestellt wird, dass die Meldung eine Anfrage ist auf welche vom Teilnehmer zu Antworten ist - in Block 73 eine Antwort generiert. Diese Antwort wird in Block 74 auf dem Bus abgesetzt, wobei während des Absetzens ein Beobachten des Busses auf Kollisionen erfolgt.

Wird in 75 keine Kollision detektiert, so ist alles in Ordnung und die Adresse kann beibehalten werden, wie Block 77 zeigt.

Trat eine Kollision auf, so ist in Block 76 zu unterscheiden, ob ein Konflikt gleicher Adressen oder ein Konflikt unterschiedlicher Adressen - also ein reiner Buszugriffskonflikt - aufgetreten ist.

Ersteres, also der Konflikt gleicher Adressen, erfordert eine Vergabe einer geänderten eigenen Adresse des Teilnehmers an sich selbst und einen anschließenden neuerlicher Absetzversuch der Meldung mit dieser neuen Adresse in Block 74.

Handelt es sich um Zweiteres, also um einen Konflikt von zwei unterschiedlichen Adressen, so kann bei Freiwerden des Busses ein neuer Absetzversuch 74 ohne Änderung der eigenen Adresse durchgeführt werden.

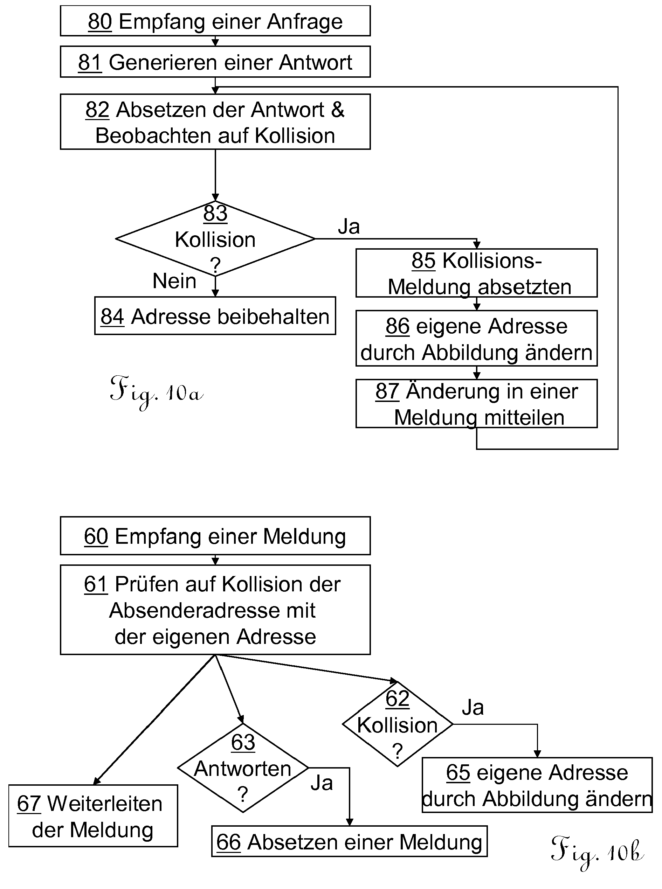

**Fig. 10a** zeigt ein zweites Beispiel eines Ablaufs einer erfindungsgemäßen Kommunikation in einem Ablaufdiagramm.

Auf eine in Block 80 empfangene Anfrage hin wird in Block 81 eine Antwort generiert und diese in Block 82 - unter Beobachtung auf allfällige Kollisionen - auf dem gemeinsamen Kommunikationsmedium abgesetzt. Tritt in Block 83 eine Kollision auf, so wird mit Block 85 eine Kollisionsmeldung abgesetzt, in Block 86 die eigene Adresse durch Abbildung geändert und diese Änderung, z.B. mit alter und neuer Adresse, in Block 87 allen weiteren Teilnehmern kommuniziert. Tritt keine Kollision auf, wird in Block 84 die Adresse des Teilnehmers beibehalten, und die Bearbeitung der Anfrage ist abgeschlossen.

**Fig. 10b** zeigt ein drittes Beispiel eines Ablaufs einer erfindungsgemäßen Kommunikation in einem Ablaufdiagramm, wobei diese speziell bei einer Busstruktur von Fig. 1 oder Fig. 2 auftritt.

Die in Block 60 empfangene Meldung wird in Block 61 auf eine Kollision der in der Meldung enthaltenen Absenderadresse mit der teilnehmereigenen Adresse geprüft. Wird in Block 62 eine Kollision festgestellt, so ändert der Teilnehmer in Block 65 seine eigene Adresse durch eine Abbildung, in einem einfachen Beispiel also etwa durch eine Inkrementierung seiner teilnehmereigenen Adresse.

Wenn in Block 63 ein Antworten erforderlich ist, so wird die entsprechende Antwort-Meldung in Block 66 abgesetzt.

Um ein Erreichen aller Teilnehmer sicherzustellen wird die zuvor in Block 60 empfangene Meldung in Block 67 an jener Schnittstelle, an welcher sie nicht empfangen wurde, weitergeleitet.

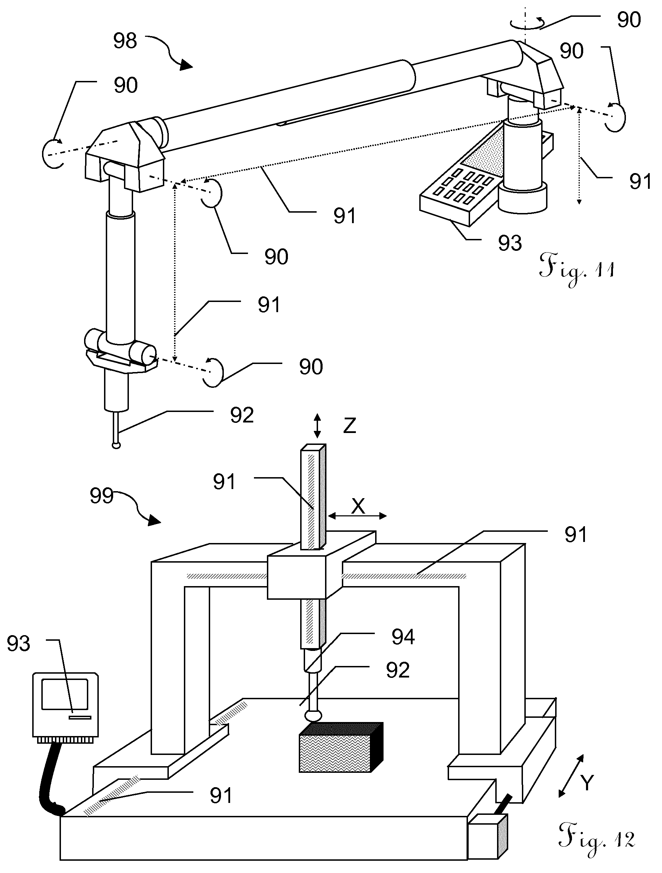

**Fig. 11** zeigt ein erstes Beispiel eines Messsystems 98. Das gezeigte Messgerät 98 ist als Articulated Arm ausgebildet, welcher an seinen Bewegungsachsen mit Lineargebern 91 oder Drehgebern 90 ausgestattet ist. Der Articulated Arm weist auch einen auswechselbaren Messkopf 92 und eine Steuereinheit 93 auf. Dabei sind die an der Messung beteiligten Geräte, also speziell die Lineargeber 91, Drehgeber 90, der Messkopf 92 und die Steuereinheit 93, Teilnehmer am erfindungsgemäßen Kommunikationssystem.

**Fig. 12** zeigt ein zweites Beispiel eines Messsystems 99 als ein Koordinatenmessgerät mit einem Kommunikationssystem mit Teilnehmern, welche nach der vorliegenden Erfindung kommunizieren. Das gezeigte Messgerät 99 ist speziell als Koordinatenmessgerät in Portalbauweise ausgebildet, welche mit Lineargebern 91 ausgestattet ist. Dabei können die Teilnehmer insbesondere auch im Betrieb auswechselbare Komponenten - beispielsweise wechselbare Mess-Proben, oder Schwenkköpfe mit zusätzlichen Drehgebern - sein, welche auch mit dem Kommunikationssystem verbunden werden und somit bei einem Wechsel auch während des Betriebs das Kommunikationssystem verändern können. Der oder die neu hinzugekommenen Teilnehmer vergeben sich dabei erfindungsgemäß selbsttätig und automatisch, ohne explizites äußeres einwirken, eine in diesem Kommunikationssystem eindeutige Adresse.

Ein Beispiel eines solchen auswechselbaren Messkopfs 92 ist in der gezeigten Figur an einem Schwenkkopf 94 angebracht. Eine externe Steuereinheit 93 koordiniert die Messabläufe und kommuniziert mit den anderen Teilnehmern, um deren Messdaten zu erhalten. Die datenverarbeitenden Geräte oder Komponenten, mit welchen das Messsystem ausgestattet ist - speziell also die Lineargeber 91, der motorisch bewegliche Schwenkkopf 94, der Messkopf 92 und die Steuereinheit 93 - sind dabei als Teilnehmer am erfindungsgemäßen Kommunikationssystem ausgebildet.

Neben den in den Fig. 11 und Fig. 12 explizit gezeigten Messsystemen kann das erfindungsgemäße Kommunikationsverfahren auch in anders aufgebauten Messsystemen Anwendung finden, etwa in Theodoliten, Totalstationen, Lasertrackern, Laserscannern, etc.

Da die Kommunikation meist mittels Mikroprozessoren, DSPs, FPGAs ASICS, etc. erfolgt, betrifft die vorliegende Erfindung auch ein Computerprogrammprodukt mit Programmcode, der auf einem maschinenlesbaren Träger gespeichert ist oder ein Computer-Daten-Signal, verkörpert durch eine elektromagnetische Welle, zur Durchführung des erfindungsgemäßen Verfahrens. Dabei führt der Programmcode speziell ein Beobachten von Meldungen auf einem Bussystem durch, über welches mehrere Teilnehmer eines Messsystems miteinander kommunizieren. Bei einer Detektion einer Kollision von Kommunikationsadressen wird eine geänderte, teilnehmereigene, flüchtig gespeicherte Kommunikationsadresse als neue eigene Kommunikationsadresse vergeben. Dieses gilt speziell, wenn der Programmcode in einem Teilnehmer des Messsystems aufgeführt wird.

## Patentansprüche

1. Verfahren zur Adressvergabe von teilnehmerspezifischen Kommunikationsadressen für Teilnehmer (1) in einem Messsystem, insbesondere in einem Positionsmesssystem eines Koordinatenmessgeräts (98,99) mit Messsensoren (90,91,92,94) als Teilnehmern (1),
in welchem die Kommunikation der Teilnehmer (1) über ein Bussystem (2) mittels Meldungen mit zumindest einer Kommunikationsadresse und einem Meldungsinhalt erfolgt, wobei die von einem der Teilnehmer (1) gesendeten Meldungen von allen weiteren der Teilnehmer (1) empfangen werden, und
wobei die Teilnehmer (1) im Rahmen eines Kalibrier- oder Referenziervorgangs des Messsystems eine automatische Adressiteration mit einem
■ Beobachten der Meldungen auf dem Bussystem (2) und einem
■ Erkennen einer Kollision durch eine Kommunikationsadresse einer empfangenen Meldung welche gleich der teilnehmereigenen Kommunikationsadresse ist
und ein
■ kollisionsbedingtes Vergeben einer geänderten und mit der empfangenen Meldung kollisionsfreien teilnehmereigenen Kommunikationsadresse des Teilnehmers an sich selbst,
durchführen, und
im Rahmen des Kalibrier- oder Referenziervorgangs ein definiertes Stimulieren von zumindest einem Sensor zumindest eines der Teilnehmer (1) durchgeführt wird, und ein Ermitteln einer Adressen-Geräte-Zuordnung der Teilnehmer (1) im Messsystem anhand der beim definierten Stimulieren erfassten Sensorwerte erfolgt, insbesondere wobei eine Identifikation der Teilnehmer in ihrer Reihenfolge und/oder Funktion im Messsystem erfolgt.

2. Verfahren nach Anspruch 1, **dadurch gekennzeichnet, dass** zur Adressiteration jeder der Teilnehmer (1) von ihm gesendete Meldungen mit einem teilnehmerspezifischen Meldungsinhalt versieht,
sodass bei gleichen Kommunikationsadressen durch den teilnehmerspezifischen Meldungsinhalt als potentiell teilnehmereindeutigen Wert eine hohe Kollisionswahrscheinlichkeit der Meldungen hergestellt wird.

3. Verfahren nach Anspruch 2, **dadurch gekennzeichnet, dass** der teilnehmereindeutige Meldungsinhalt anhand eines vom Teilnehmer (1) bestimmten Sensormesswerts gebildet wird.

4. Verfahren nach Anspruch 2 oder 3, **dadurch gekennzeichnet, dass**
der teilnehmereindeutige Meldungsinhalt anhand einer im Teilnehmer (1) generierten Zufallszahl gebildet wird.

5. Verfahren nach einem der Ansprüche 1 bis 4, **dadurch gekennzeichnet, dass**
ein Teilnehmer (1), welcher die Kollision seiner teilnehmereigenen Kommunikationsadressen erkennt, unter Anwendung einer Abbildungsfunktion ein Vergeben einer neuen teilnehmereigenen Kommunikationsadressen an sich selbst durchführt,
wobei die Abbildungsfunktion derart ausgebildet ist,
dass die Adressiteration hin zu eindeutigen teilnehmerspezifischen Adressen für alle der Teilnehmer (1) des Meßsystems konvergiert, wobei die Abbildungsfunktion vom teilnehmereindeutigen Inhalt abhängt.

6. Verfahren nach Anspruch 5, **dadurch gekennzeichnet, dass** das Bestimmen der neuen teilnehmereigenen Kommunikationsadressen anhand der Abbildungsfunktion erfolgt, welche durch Einbezug eines Unterschieds der kollidierenden Meldungen erfolgt.

7. Verfahren nach einem der Ansprüche 1 bis 6, **dadurch gekennzeichnet, dass**
ein Teilnehmer (1) beim Vergeben einer geänderten Kommunikationsadresse an sich selbst eine Meldung mit seiner alten und seiner neuen Adresse absetzt.

8. Verfahren nach einem der Ansprüche 1 bis 7, **dadurch gekennzeichnet, dass**
die Vergabe einer geänderten teilnehmereigenen Kommunikationsadresse an sich selbst aktivierbar und deaktivierbar ist,
wobei infolge eines Empfangs einer spezielle LOCK-Meldung ein oder mehrere der Teilnehmer (1) ihre teilnehmereigene Kommunikationsadresse fixieren und keine weitere Vergabe einer geänderten Kommunikationsadresse an sich selbst mehr durchführen, insbesondere wobei durch eine RESET-Meldung, ein ResetSignal oder durch Stromlosschaltung der Teilnehmer (1) die Vergabe einer geänderten Kommunikationsadresse an sich selbst reaktiviert wird.

9. Verfahren nach einem der Ansprüche 1 bis 8, **dadurch gekennzeichnet, dass**
die teilnehmereigene Kommunikationsadresse nur flüchtig im Teilnehmer (1) gespeichert ist.

10. Verfahren nach Anspruch 8, **dadurch gekennzeichnet, dass** bei Kollisionsfreiheit der Meldungsinhalte eine Konvergenz der Adressiteration detektiert und die Vergabe deaktiviert wird, insbesondere wobei die teilnehmereigene Kommunikationsadresse nach der Konvergenz der Adressiteration in einem nichtflüchtigen Speicher abgelegt wird und die abgelegte Kommunikationsadresse zukünftig als Startwert für eine spätere, erneute Adressiteration dient.

11. Verfahren nach einem der Ansprüche 1 bis 10, **dadurch gekennzeichnet, dass**
die Kommunikation mit einer Serienstruktur zwischen jeweils zwei der Teilnehmer (1) oder über ein gemeinsames Kommunikationsmedium erfolgt, wobei die Kommunikationsschnittstellen entsprechend der RS422, RS423, RS323 oder RS485 Spezifikation ausgeführt sind,
insbesondere wobei alle Teilnehmer (1) zusätzlich mit einer globalen, gemeinsamen Takt-Trigger-Signalleitung verbunden sind, über welche
eine Synchronisation von teilnehmerinternen, lokalen Taktsignalen in den Teilnehmern erfolgt, welche zur Kommunikation und/oder Messwerterfassung in den Teilnehmern (1) angewandt werden, und
eine Triggerung einer Erfassung eines Messwertes erfolgt.

12. Teilnehmer (1) einer bidirektionalen Messsystem-Kommunikation, insbesondere ein Teilnehmer (1) als Messwertsensor (90,91,92,94) in einem Positionsmesssystem eines Koordinatenmessgeräts (98,99), **dadurch**
**gekennzeichnet, dass**
der Teilnehmer (1)
▪ eine Meldungsverarbeitungseinheit, welche derart ausgebildet ist, dass diese ein Adressiterationsverfahren gemäß einem der Ansprüche 1 bis 11 durchführt und
▪ zumindest eine von der Meldungsverarbeitungseinheit bedienbare Kommunikationsschnittstellen (3) zur kommunikativen Verbindung mit zumindest einem weiteren Teilnehmer (1) über Meldungen auf einem Bussystem (2) bei welchem die von einem Teilnehmer (1) gesendeten Meldungen von allen weiteren Teilnehmern (1) empfangbar sind,
aufweist.

13. Teilnehmer (1) nach Anspruch 12, **dadurch gekennzeichnet, dass**
der Teilnehmer (1) einen Zufallszahlengenerator und/oder einen Messwertsensor aufweist und eine Herstellung einer hohe Kollisionswahrscheinlichkeit der Meldungen zur Adressiteration bei gleichen teilnehmereigenen Kommunikationsadressen mit einem teilnehmerspezifischen Meldungsinhalt als einem potentiell teilnehmereindeutigen Wert des Zufallszahlengenerators und/oder des Messwertsensors erfolgt.

14. Koordinatenmessgerät (98,99) mit einem Kommunikationssystem mit Messwertgebern als Teilnehmern (1) nach einem der Ansprüche 12 oder 13, welches mit einem Verfahren nach einem der Ansprüche 1 bis 11 arbeitet, insbesondere
wobei eine im Betrieb auswechselbare Komponente, speziell eine wechselbare Mess-Probe (92,94), als Teilnehmer (1) mit dem Kommunikationssystem verbindbar ist.

15. Computerprogrammprodukt mit Programmcode, der auf einem maschinenlesbaren Träger gespeichert ist, oder Computer-Daten-Signal, verkörpert durch eine elektromagnetische Welle, jeweils ausgebildet zur Durchführung des Verfahrens nach einem der Ansprüche 1 bis 11, wobei der Programmcode ein Beobachten von Meldungen auf einem Bussystem, über welches mehrere Teilnehmer eine Meßsystems miteinander kommunizieren, durchführt und bei einer Detektion einer Kollision infolge von gleichen Kommunikationsadressen eine geänderte, teilnehmereigene Kommunikationsadresse an den, den Programmcode ausführenden Teilnehmer (1) vergibt, vorzugsweise wenn der Programmcode in einem Teilnehmer (1) eines Messsystems ausgeführt wird.

## Claims

1. A method for address allocation of participant-specific communication addresses for participants (1) in a measuring system, particularly in a position-measuring system of a coordinate-measuring device (98, 99) with measuring sensors (90, 91, 92, 94) as participants (1), in which the communication of the participants (1) takes place via a bus system (2) by means of messages with at least one communication address and a message content, wherein the messages transmitted by one of the participants (1) are received by all other participants (1), and
wherein the participants (1), within a calibration or referencing process of the measuring system, carry out an automatic address iteration with a
• monitoring of the messages on the bus system (2) and a
• detection of a collision by a communication address of a received message which is identical to the participant-dedicated communication address, and a
• collision-related allocation of a changed participant-dedicated communication address of the participant to itself which does not collide with the received message,
and a defined stimulation of at least one sensor of at least one of the participants (1) is carried out within the calibration or referencing process,
and a determination of an address-device allocation of the participants (1) in the measuring system takes place using the sensor values gathered by the defined stimulation, in particular wherein, thereby, an identification of the participants (1) in their sequence and/or function in the measuring system takes place.

2. The method as claimed in claim 1, **characterized in that**,
for the address iteration, each of the participants (1) provides messages transmitted by it with a participant-specific message content,
so that, in the case of identical communication addresses, a high probability of collision of the messages is established through the participant-specific message content as a potentially participant-unique value.

3. The method as claimed in claim 2, **characterized in that**
the participant-unique message content is formed using a sensor measurement value defined by the participant (1).

4. The method as claimed in claim 2 or 3, **characterized in that**
the participant-unique message content is formed using a random number generated in the participant (1).

5. The method as claimed in any one of claims 1 to 4, **characterized in that**
a participant (1) which detects the collision of its participant-dedicated communication addresses carries out an allocation of a new participant-dedicated communication address to itself using a mapping function,
wherein the mapping function is designed in such a way that the address iteration converges towards participant-specific addresses for all of the participants (1) of the measuring system, wherein the mapping function depends on the participant-unique content.

6. The method as claimed in claim 5, **characterized in that**
the definition of the new participant-dedicated communication addresses takes place using the mapping function, which is effected by incorporating a difference between the colliding messages.

7. The method as claimed in any one of claims 1 to 6, **characterized in that**
a participant (1), when allocating a changed communication address to itself, transmits a message with its old and its new address.

8. The method as claimed in any one of claims 1 to 7, **characterized in that**
the self-allocation of a changed participant-dedicated communication address can be activated and deactivated,
wherein, after receiving a specific LOCK message, one or more of the participants (1) fixes its participant-dedicated communication address and carries out no further allocation of a changed communication address to itself, in particular wherein, by means of a RESET message, a reset signal or through shutdown of the participants (1), the self-allocation of a changed communication address is reactivated.

9. The method as claimed in any one of claims 1 to 8, **characterized in that**
the participant-dedicated communication address is stored only in volatile form in the participant (1).

10. The method as claimed in claim 8, **characterized in that**,
if the message contents are free from collisions, a convergence of the address iteration is detected and the allocation is deactivated, in particular wherein the participant-dedicated communication address is stored in a non-volatile memory following the convergence of the address iteration and the stored communication address serves in future as an initial value for a subsequent new address iteration.

11. The method as claimed in any one of claims 1 to 10, **characterized in that**
the communication takes place with a series structure between, in each case, two of the participants (1) or over a common communication medium, wherein the communication interfaces are designed according to the RS422, RS423, RS323 or RS485 specification,
in particular wherein all participants (1) are additionally connected to a global, common clock trigger signal line, via which
a synchronization of participant-internal, local clock signals takes place in the participants,
which are used for communication and/or measurement value acquisition in the participants (1), and a triggering of an acquisition of a measurement value takes place.

12. A participant (1) in a two-way measuring system communication, in particular a participant (1) as a measurement value sensor (90, 91, 92, 94) in a position-measuring system of a coordinate measuring machine (98, 99), **characterized in that** the participant (1) has
• a message processing unit which is designed in such a way that it carries out an address iteration method as claimed in any one of claims 1 to 11, and
• at least one communication interface (3) operable by the message processing unit for the communicative connection to at least one further participant (1) via messages on a bus system (2) in which the messages transmitted by a participant (1) are receivable by all other participants (1).

13. The participant (1) as claimed in claim 12, **characterized in that**
the participant (1) has a random number generator and/or a measurement value sensor and an establishment of a high probability of collision of the messages takes place for the address iteration in the case of identical participant-dedicated communication addresses with a participant-specific message content as a potentially participant-unique value of the random number generator and/or the measurement value sensor.

14. A coordinate-measuring device (98, 99) with a communication system with measurement value sensors as participants (1) as claimed in any one of claims 12 or 13, which operates with a method as claimed in any one of claims 1 to 11, in particular
wherein a component which is exchangeable in operation, especially an exchangeable measuring probe (92, 94), is connectable as a participant (1) to the communication system.

15. A computer program product with program code which is stored on a machine-readable medium, or a computer data signal, being embodied by an electromagnetic wave, respectively adapted to carry out the method as claimed in any one of claims 1 to 11, wherein the program code carries out a monitoring of messages on a bus system via which a plurality of participants of a measuring system communicate with one another, and, on detection of a collision due to identical communication addresses, allocates a changed, participant-dedicated communication address to the participant (1) executing the program code, preferably when the program code is executed in a participant (1) of a measuring system.

## Revendications

1. Procédé pour l'attribution d'adresses de communication spécifiques d'abonnés pour des abonnés (1) dans un système de mesure, en particulier dans un système de mesure de position d'un appareil de mesure de coordonnées (98, 99) avec des capteurs de mesure (90, 91, 92, 94) comme abonnés (1), dans lequel la communication des abonnés (1) se fait par un système de bus (2) au moyen de messages avec au moins une adresse de communication et un contenu de message, cependant que les messages envoyés par l'un des abonnés (1) sont reçus par tous les autres abonnés (1),
et cependant que les abonnés (1) effectuent, dans le cadre d'un processus d'étalonnage ou de référencement du système de mesure, une itération automatique d'adresses avec une
▪ observation des messages sur le système de bus (2) et une
▪ reconnaissance d'une collision par une adresse de communication d'un message reçu qui est la même que l'adresse de communication propre à l'abonné et une
▪ attribution en raison de la collision d'une adresse de communication de l'abonné à lui-même qui est modifiée, propre à l'abonné et exempte de collision avec le message reçu, et
une stimulation définie d'au moins un capteur d'au moins l'un des abonnés (1) est effectuée dans le cadre du processus d'étalonnage ou de référencement et une détermination d'une association adresses-appareils des abonnés (1) est effectuée dans le système de mesure à l'aide des valeurs de capteur détectées lors de la stimulation définie, en particulier cependant qu'une identification des abonnés est effectuée dans leur ordre et/ou fonction dans le système de mesure.

2. Procédé selon la revendication 1, **caractérisé en ce que** pour l'itération d'adresses chacun des abonnés (1) pourvoit des messages envoyés par lui d'un contenu de message spécifique à l'abonné si bien que, pour les mêmes adresses de communication, une haute probabilité de collision des messages est produite par le contenu de message spécifique à l'abonné comme valeur potentiellement univoque de l'abonné.

3. Procédé selon la revendication 2, **caractérisé en ce que** le contenu de message univoque de l'abonné est formé à l'aide d'une valeur de mesure de capteur déterminée par l'abonné (1).

4. Procédé selon la revendication 2 ou 3, **caractérisé en ce que** le contenu de message univoque de l'abonné est formé à l'aide d'un nombre aléatoire généré dans l'abonné (1).

5. Procédé selon l'une des revendications 1 à 4, **caractérisé en ce qu'**un abonné (1) qui reconnaît la collision de ses propres adresses de communication d'abonné effectue, en appliquant une fonction de mappage, une attribution d'une nouvelle adresse de communication propre à l'abonné à lui-même, cependant que la fonction de mappage est configurée de telle manière que l'itération d'adresses converge vers des adresses univoques spécifiques aux abonnés pour tous les abonnés (1) du système de mesure, cependant que la fonction de mappage dépend du contenu univoque de l'abonné.

6. Procédé selon la revendication 5, **caractérisé en ce que** la détermination des nouvelles adresses de communication propres aux abonnés se fait à l'aide de la fonction de mappage qui se fait en tenant compte d'une différence des messages en collision.

7. Procédé selon l'une des revendications 1 à 6, **caractérisé en ce qu'**un abonné (1), lors de l'attribution d'une adresse de communication modifiée à lui-même, émet un message avec son ancienne et sa nouvelle adresse.

8. Procédé selon l'une des revendications 1 à 7, **caractérisé en ce que** l'attribution d'une adresse de communication modifiée propre à l'abonné à lui-même peut être activée et désactivée, cependant qu'en raison d'une réception d'un message spécial LOCK, un ou plusieurs abonnés (1) fixent leur propre adresse de communication d'abonné et n'effectuent plus d'autre attribution d'adresse de communication modifiée à soi-même, en particulier cependant que par un message de RESET un signal de réinitialisation ou par commutation hors tension des abonnés (1) l'attribution d'une adresse de communication modifiée à lui-même est réactivée.

9. Procédé selon l'une des revendications 1 à 8, **caractérisé en ce que** l'adresse de communication propre à l'abonné n'est mémorisée que de manière volatile dans l'abonné (1).

10. Procédé selon la revendication 8, **caractérisé en ce qu'**en cas d'absence de collision des contenus de message une convergence de l'itération d'adresses est détectée et l'attribution est désactivée, en particulier cependant que l'adresse de communication propre à l'abonné est déposée, après la convergence de l'itération d'adresses, dans une mémoire non volatile et l'adresse de communication enregistrée sert à l'avenir de valeur de départ pour une nouvelle itération d'adresses ultérieure.

11. Procédé selon l'une des revendications 1 à 10, **caractérisé en ce que** la communication se fait avec une structure de série entre respectivement deux abonnés (1) ou par un moyen de communication commun, cependant que les interfaces de communication sont réalisées selon la spécification RS422, RS423, RS323 ou RS485, en particulier cependant que tous les abonnés (1) sont reliés en plus à une ligne de signal de déclenchement d'horloge globale commune par laquelle une synchronisation de signaux d'horloge locaux, internes aux abonnés, se fait dans les abonnés qui sont utilisés pour la communication et/ou la détection de valeurs de mesure dans les abonnés (1) et un déclenchement d'une détection d'une valeur de mesure est effectuée.

12. Abonné (1) d'une communication bidirectionnelle de système de mesure, en particulier abonné (1) comme capteur de valeur de mesure (90, 91, 92, 94) dans un système de mesure de position d'un appareil de mesure de coordonnées (98, 99), **caractérisé en ce que** l'abonné (1) présente
▪ une unité de traitement de messages qui est configurée telle que celle-ci effectue un procédé d'itération d'adresses selon l'une des revendications 1 à 11 et
▪ au moins une interface de communication (3) qui peut être opérée par l'unité de traitement de messages pour la liaison communicative avec au moins un autre abonné (1) par des messages sur un système de bus (2) dans lequel les messages envoyés par un abonné (1) peuvent être reçus par tous les autres abonnés (1).

13. Abonné (1) selon la revendication 12, **caractérisé en ce que** l'abonné (1) présente un générateur de nombre aléatoire et/ou un capteur de valeur de mesure et une production d'une haute probabilité de collision des messages se fait pour l'itération d'adresses pour des mêmes adresses de communication propres aux abonnés avec un contenu de message spécifique à l'abonné comme valeur potentiellement univoque de l'abonné du générateur de nombre aléatoire et/ou du capteur de valeur de mesure.

14. Appareil de mesure de coordonnées (98, 99) avec un système de communication avec des capteurs de valeurs de mesure comme abonnés (1) selon l'une des revendications 12 ou 13 qui travaille avec un procédé selon l'une des revendications 1 à 11, en particulier cependant qu'un composant interchangeable pendant le fonctionnement, en particulier une sonde de mesure échangeable (92, 94), peut être relié comme abonné (1) au système de communication.

15. Produit de programme d'ordinateur avec code de programme qui est mémorisé sur un support lisible par machine ou signal de données d'ordinateur incorporé par une onde électromagnétique, configuré respectivement pour l'exécution du procédé selon l'une des revendications 1 à 11, le code de programme effectuant une observation de messages sur un système de bus par lequel plusieurs abonnés d'un système de mesure communiquent l'un avec l'autre et attribuant, lors d'une détection d'une collision par suite de mêmes adresses de communication, une adresse de communication modifiée propre à l'abonné à l'abonné (1) qui exécute le code de programme, de préférence lorsque le code de programme est exécuté dans un abonné (1) d'un système de mesure.
